# EUROPEAN PATENT APPLICATION

(11) **EP 4 822 417 A1**
(43) Date of publication of application: **14.10.2026**
(21) Application number: 26164397.7
(22) Date of filing: 12.03.2026
(51) Int. Cl.: G02B 7/09, G02B 13/00

(54) **CAMERA MODULE AND ELECTRONIC DEVICE**

(30) Priority: 08.04.2025 CN 202510440579; 27.05.2025 CN 202510697680
(71) Applicant: GUANGDONG OPPO MOBILE TELECOMMUNICATIONS CORP., LTD., Dongguan, Guangdong 523860 (CN)
(72) Inventor: WEI, Yi, Dongguan, Guangdong, 523860 (CN); CHEN, Jiawei, Dongguan, Guangdong, 523860 (CN); WU, Xiangxi, Dongguan, Guangdong, 523860 (CN); TAN, Yaocheng, Dongguan, Guangdong, 523860 (CN); GAO, Yuchan, Dongguan, Guangdong, 523860 (CN)
(74) Representative: Novagraaf Technologies

(57) **Abstract**

The present application provides a camera module (20) and an electronic device (10). The camera module (20) includes an image sensor (23) and a light-guiding prism (21). The light-guiding prism (21) includes at least two sub-prisms arranged separately, one sub-prism of the at least two sub-prisms faces the image sensor. The light-guiding prism is configured such that: light incident on another sub-prism of the at least two sub-prisms is capable of being sequentially reflected by the at least two sub-prisms, exiting from the one sub-prism facing the image sensor (23), and reaching the image sensor (23). At least one of two surfaces that face each other and are arranged on the at least two sub-prisms is a curved surface.

## Description

### TECHNICAL FIELD

The present disclosure relates to the field of photographing technologies, and in particular to a camera module and an electronic device.

### BACKGROUND

With the rapid development of electronic devices such as smartphones, tablet computers, and e-readers, the requirements for photographing performance of camera modules in the electronic devices are increasing. To achieve good imaging quality for distant scene photographing, some electronic devices have telephoto modules. To reduce the size of telephoto modules in the thickness direction of the electronic devices, some telephoto modules adopt a periscope design, i.e., the light path is reflected via a prism to transfer a part of the light path from the thickness direction of the electronic devices to the length-width plane direction. However, with increasing demands for photographing performance, the size of periscope camera modules in the thickness direction of the electronic devices is gradually increasing, making periscope camera modules difficult to meet the thinness design requirements of the electronic devices.

### SUMMARY

Embodiments of the present disclosure provide a camera module and an electronic device to solve a problem that increasing a size of a camera module in a thickness direction of an electronic device makes the camera module difficult to meet thinness design requirements of the electronic device.

A camera module is provided and includes an image sensor and a light-guiding prism. The light-guiding prism includes at least two sub-prisms arranged separately, one sub-prism of the at least two sub-prisms faces the image sensor. The light-guiding prism is configured such that: light incident on another sub-prism of the at least two sub-prisms is capable of being sequentially reflected by the at least two sub-prisms, exiting from the one sub-prism facing the image sensor, and reaching the image sensor. At least one of two surfaces that face each other and are arranged on the at least two sub-prisms is a curved surface.

An electronic device is provided and includes the above camera module.

In the above camera module, since one of two surfaces facing each other of the at least two sub-prisms is a curved surface, the light-guiding prism may guide light through reflection and participate in light adjustment, which is conducive to sharing the adjustment burden of a lens, thereby conducive to reducing the number of the lens in the camera module or omitting the lens in the camera module, thereby conducive to reducing the volume of the camera module and meeting the thinness requirements of the electronic device in a case where the camera module is applied to the electronic device. In addition, by splitting the light-guiding prism into at least two sub-prisms and arranging the curved surface between two sub-prisms, the arrangement of the curved surface does not occupy extra space outside the light-guiding prism, which is conducive to reducing the occupied space of the camera module.

### BRIEF DESCRIPTION OF THE DRAWINGS

In order to make the technical solutions described in embodiments of the present disclosure or the related art more clearly, the drawings used for description of some embodiments or the related art are described. Apparently, the drawings in the following description only illustrate some embodiments of the present disclosure. For those skilled in the art, other drawings may be acquired according to the drawings without any creative work.
FIG. 1 is a structural schematic view of an electronic device in some embodiments.
FIG. 2 is a structural schematic view of a camera module in some embodiments.
FIG. 3 is a structural schematic view of a light-guiding prism in some embodiments.
FIG. 4 is a structural schematic view of a first sub-prism and a second sub-prism each including a prism body and a lens structure in some embodiments.
FIG. 5 is a structural schematic view of a light-guiding prism in some embodiments.
FIG. 6 is a structural schematic view of a camera module in some embodiments.
FIG. 7 is a structural schematic view of a light-blocking layer arranged on a second light-exiting surface in some embodiments.
FIG. 8 is a structural schematic view of a camera module in some embodiments.
FIG. 9 is a structural schematic view of a camera module in some embodiments.
FIG. 10 is a structural schematic view of a camera module in a first embodiment.
FIG. 11 is a curve graph showing spherical aberration, astigmatic field, and distortion of the camera module in the first embodiment.
FIG. 12 is a structural schematic view of a camera module in a second embodiment.
FIG. 13 is a curve graph showing spherical aberration, astigmatic field, and distortion of the camera module in the second embodiment.
FIG. 14 is a structural schematic view of a camera module in a third embodiment.
FIG. 15 is a curve graph showing spherical aberration, astigmatic field, and distortion of the camera module in the third embodiment.
FIG. 16 is a structural schematic view of a camera module in a fourth embodiment.
FIG. 17 is a curve graph showing spherical aberration, astigmatic field, and distortion of the camera module in the fourth embodiment.
FIG. 18 is a structural schematic diagram of other components of an electronic device in some embodiments.

### DETAILED DESCRIPTION

To facilitate understanding of the present disclosure, the following will describe the present disclosure more comprehensively with reference to the related drawings. The drawings show some embodiments of the present disclosure. However, the present disclosure may be implemented in many different forms and is not limited to the embodiments described herein. On the contrary, the purpose of providing these embodiments is to make the content of the present disclosure more thorough and comprehensive.

As used herein, "electronic device" may refer to, but is not limited to, a device capable of receiving and/or transmitting communication signals via at least one of the following connection methods:
(1) via a wired line connection method, such as a public switched telephone network (PSTN), a digital subscriber line (DSL), a digital cable, and a direct cable connection; and
(2) via a wireless interface method, such as a cellular network, a wireless local area network (WLAN), a digital television network such as a DVB-H network, a satellite network, and an AM-FM broadcast transmitter.

An electronic device configured to communicate via a wireless interface may be referred to as a "mobile terminal". Examples of the mobile terminal may include, but is not limited to, at least one of the following electronic devices:
(1) a satellite phone or a cellular phone;
(2) a Personal communication system (PCS) terminal that may combine capabilities of a cellular radio telephone, data processing, a fax, and data communication;
(3) a radio telephone, a pager, an Internet/Intranet access, a web browser, a notepad, a calendar, and a personal digital assistants (PDA) equipped with a global positioning system (GPS) receiver;
(4) a conventional laptop and/or palmtop receiver; and
(5) a conventional laptop and/or palmtop radio telephone transceiver, etc.

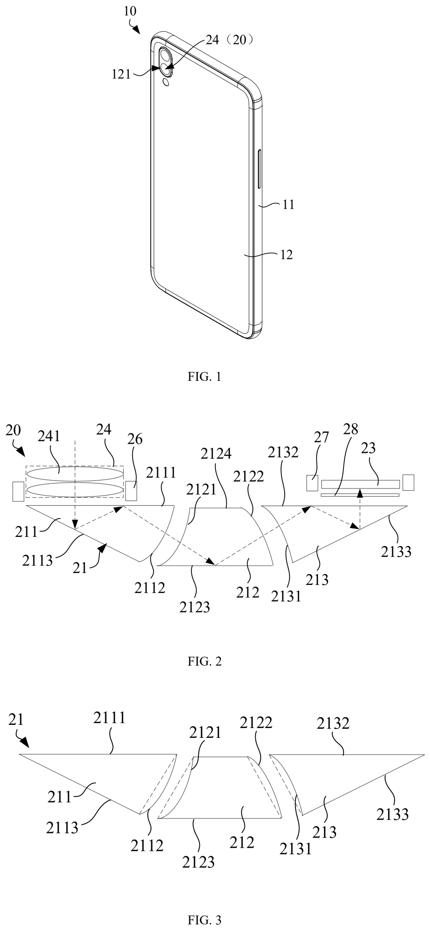

As shown in FIG. 1 and FIG. 2. FIG. 1 is a structural schematic view of an electronic device 10 in some embodiments, and FIG. 2 is a structural schematic view of a camera module 20 in some embodiments. The electronic device 10 provided in some embodiments of the present disclosure may include, but is not limited to, a mobile terminal such as a smartphone, a tablet computer, or an e-reader, etc. In some embodiments of the present disclosure, the smartphone is used as an example. The camera module 20 may be applied to the electronic device 10. The camera module 20 may include a light-guiding prism 21 and an image sensor 23. The light-guiding prism 21 may be configured to guide the light incident on the camera module 20 to the image sensor 23. The image sensor 23 may be electrically connected to a central processing unit of the electronic device 10 or to a chip configured to receive image information in the electronic device 10. The image sensor 23 may be configured to convert optical signals into electrical signals for output, enabling the electronic device 10 to have an imaging function.

In some embodiments, the electronic device 10 may include a middle frame 11, a back plate 12, and a display panel (not shown). The back plate 12 and the display panel may be respectively arranged on opposite sides of the middle frame 11, and the back plate 12, the display panel, and the middle frame 11 may enclose a receiving space. The camera module 20 may be accommodated in the receiving space and may receive external light through a light-transmitting hole 121 defined on the back plate 12. In the embodiment shown in the drawings of the present disclosure, the camera module 20 may be configured to receive the light from the side where the back plate 12 is located, and the camera module 20 may serve as a rear camera of the electronic device 10. In other embodiments, the camera module 20 may be configured to receive the light from the side where the display panel is located, and the camera module 20 may serve as a front camera of the electronic device 10. The application of the camera module 20 is not limited to the electronic device 10 described in the present disclosure. The camera module 20 may be applied to any other applicable fields and products as long as camera module 20 can achieve the photographing function.

In some embodiments, the light-guiding prism 21 may include at least two sub-prisms arranged separately. One sub-prism of the at least two sub-prisms faces the image sensor 23, and the light-guiding prism 21 may be configured such that: light incident on another sub-prism of the at least two sub-prisms is capable of being sequentially reflected by the at least two sub-prisms, exiting from the one sub-prism facing the image sensor 23, and reaching the image sensor 23. At least one of two surfaces that face each other and arranged on the at least two sub-prisms is a curved surface.

In some embodiments of the present disclosure, a surface of a sub-prism being described as a curved surface may be understood as that the radius of curvature at each point on the curved surface is not 0, the curved surface has a radian, at least a part of the curved surface is convex or concave, and at least a part of the curved surface has an effect of converging or diverging light and can participate in light adjustment of the camera module 20. The type of the curved surface may include, but is not limited to, a spherical curved surface, an aspherical curved surface, or a free-form curved surface, etc.

In the above camera module 20, since one of two surfaces facing each other of the at least two sub-prisms is a curved surface, the light-guiding prism 21 may guide light through reflection and participate in light adjustment, which is conducive to sharing the adjustment burden of a lens 241, thereby conducive to reducing the number of the lens 241 in the camera module 20 or omitting the lens 241 in the camera module 20, thereby conducive to reducing the volume of the camera module 20 and meeting the thinness requirements of the electronic device 10 in a case where the camera module 20 is applied to the electronic device 10. In addition, by splitting the light-guiding prism 21 into at least two sub-prisms and arranging the curved surface between two sub-prisms, the arrangement of the curved surface does not occupy extra space outside the light-guiding prism 21, which is conducive to reducing the occupied space of the camera module 20.

In some embodiments, the light-guiding prism 21 may include three sub-prisms, which is a first sub-prism 211, a second sub-prism 212, and a third sub-prism 213. The first sub-prism 211 may have a first light-incident surface 2111 and a first light-exiting surface 2112 that intersect with each other. The second sub-prism 212 may have a second light-incident surface 2121 and a second light-exiting surface 2122 that intersect with each other. The third sub-prism 213 may have a third light-incident surface 2131 and a third light-exiting surface 2132 that intersect with each other. The first light-exiting surface 2112 and the second light-incident surface 2121 may face each other. The second light-exiting surface 2122 and the third light-incident surface 2131 may face each other. The third light-exiting surface 2132 and the image sensor 23 may face each other. The first light-incident surface 2111 may be configured to allow the light to enter the light-guiding prism 21. For example, in a case where the camera module 20 is arranged in the electronic device 10, the first light-incident surface 2111 may face the light-transmitting hole 121. The first light-incident surface 2111 and the third light-exiting surface 2132 may be parallel and face the same side. An external light may enter the first sub-prism 211 from the first light-incident surface 2111, may undergo at least one reflection in the first sub-prism 211 and then may exit the first sub-prism 211 from the first light-exiting surface 2112, then may enter the second sub-prism 212 from the second light-incident surface 2121, may undergo at least one reflection in the second sub-prism 212 and then may exit the second sub-prism 212 from the second light-exiting surface 2122, then may enter the third sub-prism 213 from the third light-incident surface 2131, may undergo at least one reflection in the third sub-prism 213 and then may exit from the third light-exiting surface 2132, and may reach the image sensor 23. At least one of the first light-exiting surface 2112, the second light-incident surface 2121, the second light-exiting surface 2122, and the third light-incident surface 2131 may be a curved surface.

In the embodiments of present disclosure, describing two surfaces as intersecting may mean that the two surfaces may be connected to each other and intersect, or may mean that the extension surfaces of the two surfaces intersect, i.e., the planes where the two surfaces are located form an angle. In the embodiments of the present disclosure, in a case where at least one of the two surfaces is a curved surface, describing the planes where the two surfaces are located as intersecting may mean that the plane corresponding to the line connecting the two ends of the cross section of the curved surface intersects with the another surface.

By arranging the light path of the light-guiding prism 21, the first light-incident surface 2111 configured to receive the light and the third light-exiting surface 2132 configured to exit the light in the light-guiding prism 21 may be parallel and face the same side. In a case where the camera module 20 is arranged in the electronic device 10, the first light-incident surface 2111 and the third light-exiting surface 2132 may be perpendicular to the thickness direction of the electronic device 10. With this arrangement, the light-guiding prism 21 may not only deflect a part of the light path to the length-width plane direction of the electronic device 10 via reflection, but also allow the incident light path and the exit light path to overlap in the thickness direction of the electronic device 10, that is, the incident light path and the exit light path occupy at least partially the same height in the thickness direction of the electronic device 10, and the incident light path and the exit light path are not in direct contact, thereby conducive to reducing the size of the camera module 20 in the thickness direction of the electronic device 10. Additionally, in a case where the lens assembly 24 is arranged in the camera module 20, the lens assembly 24 may be arranged on the side of the first light-incident surface 2111 of the light-guiding prism 21 and face the first light-incident surface 2111. The lens assembly 24 may be located between the light-transmitting hole 121 and the first light-incident surface 2111. The axial size of the lens assembly 24 may occupy the size in the thickness direction of the electronic device 10. By arranging curved surfaces on the light-guiding prism 21, the camera module 20 provided in the above embodiments of the present disclosure may share the burden of the lens assembly 24 deflecting light, thereby conducive to reducing the number of the lens 241 having focal power in the lens assembly 24, i.e., conducive to reducing the axial size of the lens assembly 24, thereby conducive to reducing the size of the camera module 20 in the thickness direction of the electronic device 10, thereby conducive to the thin and light design of the electronic device 10. Further, as shown in FIG. 2, since the first light-incident surface 2111 and the third light-exiting surface 2132 may face the same side, in a case where the lens assembly 24 is arranged in the camera module 20, at least a part of the sizes of the lens assembly 24 and the image sensor 23 may be overlapped in the axial direction, that is, the lens assembly 24 and the image sensor 23 occupy at least partially the same height in the thickness direction of the electronic device 10, and the lens 24 and the image sensor 23 are not in direct contact, which is conducive to reducing the occupied space of the overall camera module 20 in the thickness direction of the electronic device 10.

In some embodiments, the first sub-prism 211 may have a first reflecting surface 2113 that intersects with the first light-incident surface 2111 and the first light-exiting surface 2112. The second sub-prism 212 may have a second reflecting surface 2123 that intersects with the second light-incident surface 2121 and the second light-exiting surface 2122. The third sub-prism 213 may have a third reflecting surface 2133 that intersects with the third light-incident surface 2131 and the third light-exiting surface 2132. The light-guiding prism 21 may be configured such that: the light incident on the first sub-prism 211 from the first light-incident surface 2111 may be sequentially reflected by the first reflecting surface 2113 and the first light-incident surface 2111 and then may exit from the first light-exiting surface 2112, the light incident on the second sub-prism 212 from the second light-incident surface 2121 may be reflected by the second reflecting surface 2123 and then may exit from the second light-exiting surface 2122, the light incident on the third sub-prism 213 from the third light-incident surface 2131 may be sequentially reflected by the third light-exiting surface 2132 and the third reflecting surface 2133 and then may exit from the third light-exiting surface 2132.

Thus, the light may undergo five reflections in the light-guiding prism 21 before exiting, which may effectively extend the light path in the light-guiding prism 21, thereby adapting to the telephoto design of the camera module 20. In some embodiments of the embodiments of the present disclosure, via the design of the light-guiding prism 21, the camera module 20 may adopt a telephoto design to enable the camera module 20 to have good distant scene photographing performance. The focal length of the camera module 20 is not limited. The number of reflections and the guide path of the light in the light-guiding prism 21 may have any other suitable arrangements, which may be adjusted based on the focal length of the camera module 20.

In some embodiments, the light-guiding prism 21 may be configured such that: incident angles of the light on the first light-incident surface 2111, the second reflecting surface 2123, and the third light-exiting surface 2132 may be greater than the total internal reflection critical angle, so that the light is capable of undergoing total internal reflection on the first light-incident surface 2111, the second reflecting surface 2123, and the third light-exiting surface 2132. The arrangement that some reflecting surfaces are capable of achieving total internal reflection is conducive to improving light reflectivity and improving light utilization efficiency of the camera module 20, thereby conducive to improving imaging quality of the camera module 20. In some embodiments, the camera module 20 may include a reflective film (not shown) arranged on the first reflecting surface 2113 and the third reflecting surface 2133. The reflective film may be configured to reflect the light incident on the first reflecting surface 2113 and the third reflecting surface 2133. The reflective film may include, but is not limited to, a metal film layer or a dielectric film layer with a reflectivity greater than or equal to 90%. The reflective films may be configured to improve reflectivity of the first reflecting surface 2113 and the third reflecting surface 2133, which is conducive to improving the light utilization efficiency of the camera module 20, thereby improving the imaging quality.

In some embodiments, total internal reflection of the light on the first light-incident surface 2111, the second reflecting surface 2123, and the third light-exiting surface 2132 may be achieved by designing the shape and refractive index of the light-guiding prism 21. For example, in some embodiments, the angle between the first light-incident surface 2111 and the first reflecting surface 2113, and the angle between the third reflecting surface 2133 and the third light-exiting surface 2132 may be 25°-45°, such as 25°, 30°, 35°, or 45°, etc. The refractive indices of the first sub-prism 211, the second sub-prism 212, and the third sub-prism 213 are not limited, and may be equal or not equal, which are not limited, as long as they may cooperate with the angle design of the surfaces to achieve total internal reflection effect.

In some embodiments, the second sub-prism 212 may have a second flat surface 2124 opposite to the second reflecting surface 2123. The first light-incident surface 2111, the second flat surface 2124, and the third light-exiting surface 2132 may be coplanar. The second reflecting surface 2123 may be parallel to the first light-incident surface 2111, which is conducive to optimizing the structural arrangement of the light-guiding prism 21 and conducive to the assembly and support of the light-guiding prism 21 in the camera module 20 and the electronic device 10, thereby improving structural reliability of the camera module 20.

In some embodiments of the present disclosure, the lens assembly 24 of the camera module 20 may be omitted. In a case where the lens assembly 24 is arranged in the camera module 20, the number of the lens 241 having focal power in the lens assembly 24 is not limited, and the number of curved surfaces of the first light-exiting surface 2112, the second light-incident surface 2121, the second light-exiting surface 2122, and the third light-incident surface 2131 and the arrangement of the curved surfaces are not limited, which are designed based on the photographing requirements of the camera module 20.

In some embodiments, the lens assembly 24 may be arranged in the camera module 20. The lens assembly 24 may be arranged on the side of the first light-incident surface 2111 and facing the first light-incident surface 2111. The number of the lens 241 having focal power in the lens assembly 24 may be less than or equal to 3. In some embodiments of the present disclosure, the number of the lens 241 having focal power in the lens assembly 24 being 2 is taken as an example. This arrangement, in conjunction with the design of curved surfaces in the light-guiding prism 21, is conducive to reducing the number of the lens 241 in the lens assembly 24, so that the axial size of the lens assembly 24 may be reduced, thereby conducive to reducing the thickness size of the camera module 20 in the electronic device 10 to meet the thin and light design requirements of the electronic device 10.

In some embodiments, the number of the lens 241 having focal power in the lens assembly 24 may be 2 or 3. The types of surfaces of the first light-exiting surface 2112, the second light-incident surface 2121, the second light-exiting surface 2122, and the third light-incident surface 2131 that are curved surfaces are spherical surfaces or aspherical surfaces. With this arrangement, the axial size of the lens assembly 24 may be reduced to reduce the size of the camera module 20 in the thickness direction of the electronic device 10, and the number of the lens 241 having focal power in the lens assembly 24 is not too few, allowing the lens assembly 24 to configured to achieve the main light deflection in the camera module 20, thereby reducing the deflection achieved by the curved surfaces in the light-guiding prism 21. Thus, in a case where the type of curved surfaces in the light-guiding prism 21 are spherical or aspherical, excessive asymmetric aberrations is not introduced, which is conducive to ensuring the imaging quality of the camera module 20. Additionally, it makes it unnecessary for the curved surfaces in the light-guiding prism 21 to be arranged to be free-form surfaces, which is conducive to reducing the design and manufacturing difficulty of the light-guiding prism 21 and reducing the manufacturing cost of the camera module 20.

As shown in FIG. 2 and FIG. 3, in FIG. 3, broken lines schematically show the lines connecting the two ends of the corresponding curved surfaces on the cross section of the light-guiding prism 21 in a case where the first light-exiting surface 2112, the second light-incident surface 2121, the second light-exiting surface 2122, and the third light-incident surface 2132 are curved surfaces. In some embodiments, the first light-exiting surface 2112 may be a curved surface. On the cross section of the first sub-prism 211, the line connecting the two ends of the first light-exiting surface 2112 may be perpendicular to the first reflecting surface 2113. With this arrangement, in a case where the light perpendicularly enters the first sub-prism 211 from the first light-incident surface 2111 and the light undergo two reflections in the first sub-prism 211 and then exits, it may be known from the geometric relationship of the light path of the chief light in the central field of view that, when the light exits from the first light-exiting surface 2112, the chief light in the central field of view may perpendicularly enter the second light-incident surface 21212, i.e., the chief light in the central field of view is perpendicular to the tangent plane at the incident position of the chief light. Thus, the first light-exiting surface 2112 may effectively participate in light adjustment, reduce asymmetric aberrations introduced by the first light-exiting surface 2112, thereby conducive to improving the imaging quality of the camera module 20.

In some embodiments, the third light-incident surface 2131 may be a curved surface. On the cross section of the third sub-prism 213, the line connecting the two ends of the third light-incident surface 2131 may be perpendicular to the third reflecting surface 2133. In a case where the chief light of the central field of view undergoes two reflections in the third sub-prism 213 and perpendicularly enter the third light-exiting surface 2132 and exits from the third light-exiting surface 2132, it may be known from the geometric relationship of the chief light path in the third sub-prism 213 that, in a case where the chief light of the central field of view enters the third sub-prism 213 from the third light-incident surface 2131, the chief light of the central field of view may perpendicularly enter the third light-incident surface 2131, which is conducive to improving the adjustment effect of the third light-incident surface 2131 on the light and reducing spherical aberrations introduced by the third light-incident surface 2131, thereby conducive to improving the imaging quality of the camera module 20.

In some embodiments, both the second light-incident surface 2121 and the second light-exiting surface 2122 may be curved surfaces. On the cross section of the light-guiding prism 21, the line connecting the two ends of the first light-exiting surface 2112 may be parallel to the line connecting the two ends of the second light-incident surface 2121. The line connecting the two ends of the second light-exiting surface 2122 may be parallel to the line connecting the two ends of the third light-incident surface 2131. Thus, in a case where the chief light of the central field of view is perpendicularly enter the first light-exiting surface 2112 and the third light-incident surface 2131, the chief light of the central field of view may perpendicularly enter the second light-incident surface 2121 and the second light-exiting surface 2122, which is conducive to improving the adjustment effect of the second light-incident surface 2121 and the second light-exiting surface 2122 on the light and reducing asymmetric aberrations introduced by the second light-incident surface 2121 and the second light-exiting surface 2122, thereby conducive to improving the imaging quality of the camera module 20. Thus, the camera module 20 may achieve miniaturization design and good imaging quality.

In some embodiments, one of the first light-exiting surface 2112 and the second light-incident surface 2121 may be a convex surface, and another one may be a concave surface. One of the second light-exiting surface 2122 and the third light-incident surface 2131 may be a convex surface, and another one may be a concave surface. With this arrangement, in the two curved surfaces facing each other in the light-guiding prism 21, one is convex and another is concave. The combination of convex and concave surfaces may participate in light adjustment and is conducive to improving the structural compactness of the light-guiding prism 21, thereby conducive to reducing the occupied space of the overall light-guiding prism 21, conducive to reducing the volume of the camera module 20, and conducive to the miniaturization design of the electronic device 10.

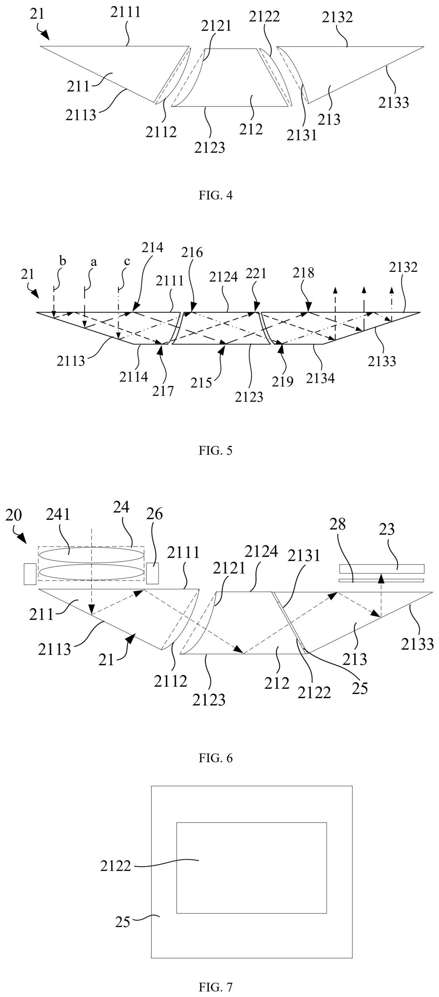

In the embodiment shown in FIG. 3, each of the first sub-prism 211, the second sub-prism 212, and the third sub-prism 213 may be an integral structure. In a case where each of the first sub-prism 211, the second sub-prism 212, and the third sub-prism 213 has a curved surface, the curved surface may be formed on the surfaces of the first sub-prism 211, the second sub-prism 212, and the third sub-prism 213. As shown in FIG. 4, in other embodiments, in a case where the first sub-prism 211 has a convex curved surface, the first sub-prism 211 may include a prism body and a lens structure. The lens structure may be independent from the prism body and may be fixedly arranged on the side of the prism body facing the second sub-prism 212. The surface of the lens structure facing the prism body may be a flat surface. The first light-exiting surface 2112, which is a curved surface, may be arranged on the surface of the lens structure away from the prism body. With this arrangement, the curved surface may be arranged on the lens structure that is independent from the prism body. For example, the lens structure with the curved surface may be independently arranged first and then arranged fixed to the prism body, which is conducive to reducing the difficulty of arranging the curved surface. In some embodiments, in a case where the second sub-prism 212 has a convex curved surface, the second sub-prism 212 may include a prism body and a lens structure independent from the prism body. The lens structure may be arranged on the side of the prism body facing the first sub-prism 211 or facing the third sub-prism 213. The curved surface may be arranged on the surface of the lens structure away from the prism body. In a case where the third sub-prism 213 has a convex curved surface, the third sub-prism 213 may include a prism body and a lens structure. The lens structure may be arranged on the side of the prism body facing the second sub-prism 212. The curved surface may be arranged on the surface of the lens structure away from the third sub-prism 213.

In some embodiments of the present disclosure, the lens assembly 24 may include two lenses 241 having focal power, the first light-exiting surface 2112 may be a convex surface, the second light-incident surface 2121 may be a concave surface, the second light-exiting surface 2122 may be a convex surface, and the third light-incident surface 2131 may be a concave surface. In some embodiments, the material of the light-guiding prism 21 may be glass. The first light-exiting surface 2112, the second light-incident surface 2121, the second light-exiting surface 2122, and the third light-incident surface 2131 may be manufactured by compression molding and grinding. In other embodiments, at least one of the first sub-prism 211, the second sub-prism 212, and the third sub-prism 213 may be manufactured from plastic by injection molding. It may be understood that the number of the lens 241 having focal power in the lens assembly 24, the focal power and surface shape of each lens 241, and the surface shape of the first light-exiting surface 2112, the second light-incident surface 2121, the second light-exiting surface 2122, and the third light-incident surface 2131 are not limited to the descriptions in the embodiments of the present disclosure and may be designed based on the light adjustment requirements of the camera module 20. For example, only one, two, or three of the first light-exiting surface 2112, the second light-incident surface 2121, the second light-exiting surface 2122, and the third light-incident surface 2131 may be curved surfaces. The surface shapes of these curved surfaces may be any combination of convex and concave surfaces.

In some embodiments, lens assembly 24 may be not arranged in the camera module 20, and the light adjustment may be performed only via the curved surfaces of the light-guiding prism 21. In this way, the size of the camera module 20 in the thickness direction of the electronic device 10 may be effectively reduced, thereby conducive to meeting the thin and light design requirements of the electronic device 10, as long as the light adjustment requirements of the camera module 20 are met. In some embodiments, the number of the lens 241 having focal power in the lens assembly 24 is one. The material of this lens 241 may include, but is not limited to, glass or plastic. In some embodiments, the number of the lens 241 in the camera module 20 may be two. For example, the materials of these two lenses 241 may both be plastic. For another example, the materials of one lens 241 may be glass, and the materials of another lens may be plastic. In some embodiments, the surface of the lens 241 made of glass in the lens assembly 24 may be a ground spherical surface or a compression-molding aspherical surface.

As shown in FIG. 5, in some embodiments, the first sub-prism 211 may have a first flat surface 2114 opposite to the first light-incident surface 2111. The second sub-prism 212 may have a second flat surface 2124 opposite to the second reflecting surface 2123. The third sub-prism 213 may have a third flat surface 2134 opposite to the third light-exiting surface 2132. The first light-incident surface 2111, the second flat surface 2124, and the third light-exiting surface 2132 may be parallel to each other. For example, the first light-incident surface 2111, the second flat surface 2124, and the third light-exiting surface 2132 may be coplanar. The first flat surface 2114, the second reflecting surface 2123, and the third flat surface 2134 may be parallel to each other, for example, coplanar. The chief light of the central field of view (the light a shown in FIG. 5) entering the light-guiding prism 21 from the first light-incident surface 2111 may be sequentially reflected by the first reflecting surface 2113, the first light-exiting surface 2112, the second reflecting surface 2123, the third light-exiting surface 2132, and the third reflecting surface 2133 and then may exit the light-guiding prism 21 from the third light-exiting surface 2132.

FIG. 5 schematically shows the light paths of two chief lights of an edge field of view entering the light-guiding prism 21 from the first light-incident surface 2111. The two chief lights of the edge field of view may be the light b and the light c. On the cross section of the light-guiding prism 21, the light b and the light c may be respectively located on opposite sides of the chief light a of the central field of view. The chief light b of the edge field of view, after entering the light-guiding prism 21 from the first light-incident surface 2111, may be sequentially reflected by the first reflecting surface 2113, the first light-incident surface 2111, the first flat surface 2114, the second flat surface 2124, and the third reflecting surface 2133 and then may exit the light-guiding prism 21 from the third light-exiting surface 2132. The chief light c of the edge field of view, after entering the light-guiding prism 21 from the first light-incident surface 2111, may be sequentially reflected by the first reflecting surface 2113, the second flat surface 2124, the third flat surface 2134, the third light-exiting surface 2132, and the third reflecting surface 2133 and then may exit the light-guiding prism 21 from the third light-exiting surface 2132.

In some embodiments of the present disclosure, the central field of view of the camera module 20 is defined as the field of view range of ±θ1 around the optical axis of the camera module 20, where θ1 is 40% of the total field of view (FOV) angle, and the incident angle of the chief light of the central field of view is less than 15°. The central field of view may correspond to an area corresponding to an image height less than or equal to 30% of the diagonal length of the image sensor 23. The edge field of view of the camera module 20 is defined as a range exceeding 60% of the total field of view angle. The incident angle of the chief light of the edge field of view exceeds 30°, and the edge field of view may correspond to an area corresponding to an image height greater than 70% of the diagonal length of the image sensor 23. The chief light of the central field of view may refer to the light within the central field of view range that passes through the center of the diaphragm of the camera module 20 and finally reaches the image sensor 23. The chief light of the edge field of view may refer to the light within the edge field of view range that passes through the center of the diaphragm of the camera module 20 and finally reaches the image sensor 23.

In some embodiments, the chief light of the central field of view may be reflected at a first reflection position 214 on the first light-incident surface 2111 and reflected at a second reflection position 215 on the second reflecting surface 2123. The chief light c of the edge field of view may be reflected at a third reflection position 216 on the second flat surface 2124. The chief light b of the edge field of view may be reflected at a fourth reflection position 217 on the first flat surface 2114. In the direction along the first light-incident surface 2111 pointing from the first reflection position 214 toward the second reflection position 215, both the third reflection position 216 and the fourth reflection position 217 may be located between the first reflection position 214 and the second reflection position 215. Both the first light-exiting surface 2112 and the second light-incident surface 2121 may be located between the third reflection position 216 and the fourth reflection position 217. Thus, the first light-exiting surface 2112 and the second light-incident surface 2121 may be arranged between the reflection positions of the two chief lights of the edge fields of view. In this way, the impact of the arrangement of the first light-exiting surface 2112 and the second light-incident surface 2121 on the reflection of the light of the edge field may be reduced, thereby conducive to reducing stray light and aberrations introduced by the arrangement of the first light-exiting surface 2112 and the second light-incident surface 2121, and conducive to improving the imaging quality of the camera module 20.

In some embodiments, the chief light a of the central field of view may be reflected at a fifth reflection position 218 on the third light-exiting surface 2132. The chief light c of the edge field of view may be reflected at a sixth reflection position 219 on the third flat surface 2134. The chief light b of the edge field of view may be reflected at a seventh reflection position 221 on the second flat surface 2124. In the direction along the third light-exiting surface 2132 pointing from the second reflection position 215 toward the fifth reflection position 218, both the sixth reflection position 219 and the seventh reflection position 221 are located between the second reflection position 215 and the fifth reflection position 218. Both the second light-exiting surface 2122 and the third light-incident surface 2131 may be located between the sixth reflection position 219 and the seventh reflection position 221. Thus, the second light-exiting surface 2122 and the third light-incident surface 2131 may be arranged between the reflection positions of the two chief lights of the edge fields of view. In this way, the impact of the arrangement of the second light-exiting surface 2122 and the third light-incident surface 2131 on the reflection of the light of the edge field may be reduced, thereby conducive to reducing stray light and aberrations introduced by the arrangement of the second light-exiting surface 2122 and the third light-incident surface 2131, and conducive to improving the imaging quality of the camera module 20.

The shape of the light-guiding prism 21 is not limited to the description in FIG. 5. For example, as shown in FIG. 2, in some embodiments, the first flat surface 2114 and the third flat surface 2134 may be omitted. The first light-exiting surface 2112 may be connected to the first light-incident surface 2111 and the first reflecting surface 2113. The third light-incident surface 2131 may be connected to the third light-exiting surface 2132 and the third reflecting surface 2133. Thus, the reflection positions of the chief lights of the edge field of view on the surfaces of the light-guiding prism 21 may be different. The positions of the first light-exiting surface 2112, the second light-incident surface 2121, the second light-exiting surface 2122, and the third light-incident surface 2131 may be adjusted bases on the reflection positions of the chief lights of the edge field of view, as long as the first light-exiting surface 2112, the second light-incident surface 2121, the second light-exiting surface 2122, and the third light-incident surface 2131 are located between the reflection positions of the two chief lights of the edge field of view to reduce the impact of the curved surface on the imaging quality in the edge field of view. This will not be repeated here.

As shown in FIG. 6, in some embodiments, at least one of the first light-exiting surface 2112 and the second light-incident surface 2121 may be a curved surface. Both the first light-exiting surface 2112 and the second light-incident surface 2121 in FIG. 6 being curved surfaces is taken as an example. The first light-exiting surface 2112 and the second light-incident surface 2121 may be spaced apart to provide sufficient space for light adjustment. Each of the second light-exiting surface 2122 and the third light-incident surface 2131 may be a flat surface. The second light-exiting surface 2122 and the third light-incident surface 2131 may be bonded together. The camera module 20 may include a light-blocking layer 25 located on one of the second light-exiting surface 2122 and the third light-incident surface 2131. The light-blocking layer 25 may surround the light-transmitting area between the second light-exiting surface 2122 and the third light-incident surface 2131. For example, an orthographic projection of the light-blocking layer 25 on the second light-exiting surface 2122 may cover the edge contour of the second light-exiting surface 2122. An orthographic projection of the light-blocking layer 25 on the third light-incident surface 2131 may cover the edge contour of the third light-incident surface 2131. The light-blocking layer 25 may include, but is not limited to, a light-blocking dielectric layer or ink screen printing and other light-blocking structures.

As shown in FIG. 7, FIG. 7 shows a structural schematic view of the light-blocking layer 25 arranged on the second light-exiting surface 2122 in some embodiments. It may be seen that the light-blocking layer 25 may absorb light outside the light-transmitting area and reduce stray light in the light-guiding prism 21, thereby conducive to improving the imaging quality of the camera module 20. In addition, since the light-blocking layer 25 is integrated between the second sub-prism 212 and the third sub-prism 213 of the light-guiding prism 21, the light-blocking layer 25 may be located on in the light propagation path, making suppression effect on the stray light direct and sufficient, and not easy to increase an occupied space of the light-guiding prism 21, thereby conducive to achieving the miniaturization design and good imaging quality of the camera module 20.

In some embodiments, at least one of the second light-exiting surface 2122 and the third light-incident surface 2131 may be a curved surface. The second light-exiting surface 2122 and the third light-incident surface 2131 may be spaced apart. Each of the first light-exiting surface 2112 and the second light-incident surface 2121 may be a flat surface. The first light-exiting surface 2112 and the second light-incident surface 2121 may be bonded together. The light-blocking layer 25 may be arranged on one of the first light-exiting surface 2112 and the second light-incident surface 2121. The light-blocking layer 25 may surround the light-transmitting area between the first light-exiting surface 2112 and the second light-incident surface 2121. For example, an orthographic projection of the light-blocking layer 25 on the first light-exiting surface 2112 may cover the edge contour of the first light-exiting surface 2112. An orthographic projection of the light-blocking layer 25 on the second light-incident surface 2121 may cover the edge contour of the second light-incident surface 2121. Thus, the light-blocking layer 25 integrated into the light-guiding prism 21 is conducive to achieving good imaging quality and miniaturization design of the camera module 20.

As shown in FIG. 2, in some embodiments, the camera module 20 may include a focus driving mechanism 26 and an anti-shake driving mechanism 27. The focus driving mechanism 26 may include, but is not limited to, a voice coil motor, etc. The anti-shake driving mechanism 27 may include, but is not limited to, an electromagnetic cantilever mechanism, etc. In a case where the lens assembly 24 is arranged in the camera module 20, the focus driving mechanism 26 may be configured to drive the lens assembly 24 to move along the axial direction close to or away from the first light-incident surface 2111 to achieve optical focusing or optical zooming function of the camera module 20. The anti-shake driving mechanism 27 may be configured to drive the image sensor 23 to move relative to the light-guiding prism 21 along two mutually perpendicular directions on a plane parallel to the third light-exiting surface 2132 to achieve optical anti-shake function of the camera module 20. Thus, the focus driving mechanism 26 may be arranged at the lens assembly 24, and the anti-shake driving mechanism 27 may be arranged at the image sensor 23, thereby conducive to reducing the risk of interference between the focus driving mechanism 26 and the anti-shake driving mechanism 27, and conducive to improving the performance stability and structural reliability of the camera module 20. In addition, the light path design of the light-guiding prism 21 is conducive to making at least part of the sizes of the focus driving mechanism 26 and the anti-shake driving mechanism 27 overlap in the axial direction of the lens assembly 24, that is, the light path design of the light-guiding prism 21 is conducive to making the focus driving mechanism 26 and the anti-shake driving mechanism 27 occupy at least partially the same height in the thickness direction of the electronic device 10, and making the focus driving mechanism 26 and the anti-shake driving mechanism 27 not in direct contact, and is conducive to reducing the size of the overall camera module 20 in the thickness direction of the electronic device 10, thereby conducive to meeting the thin and light design of the electronic device 10.

The focus driving mechanism 26 and the anti-shake driving mechanism 27 may have any other suitable arrangement, as long as the optical focusing and optical anti-shake functions of the camera module 20 may be achieved. For example, in some embodiments, both the focus driving mechanism 26 and the anti-shake driving mechanism 27 may be integrated at the lens assembly 24. The focus driving mechanism 26 may be configured to drive the lens assembly 24 to move along the axial direction. The anti-shake driving mechanism 27 may be configured to drive the lens assembly 24 to move on a plane perpendicular to the axial direction. In some embodiments, in a case where the lens assembly 24 is omitted in the camera module 20, both the focus driving mechanism 26 and the anti-shake driving mechanism 27 may be integrated at the image sensor 23. The focus driving mechanism 26 may be configured to drive the image sensor 23 to move along the axial direction. The anti-shake driving mechanism 27 may be configured to drive the image sensor 23 to move on a plane perpendicular to the axial direction.

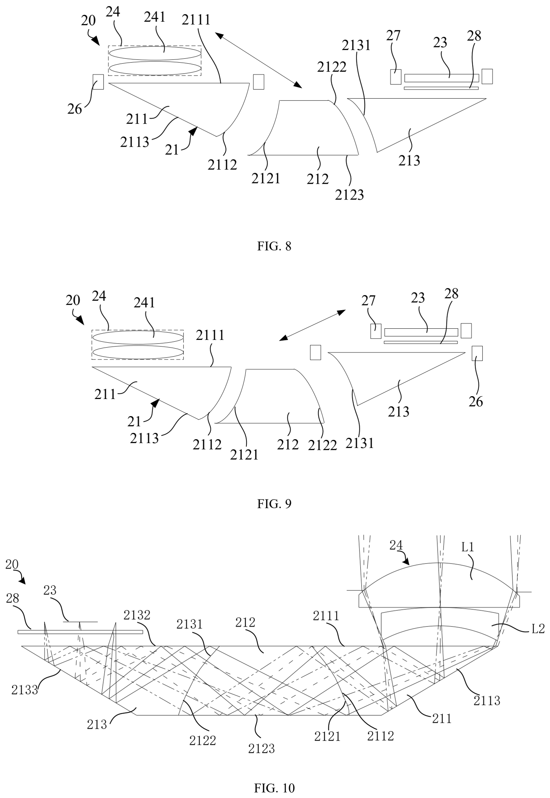

As shown in FIG. 8, in some embodiments, at least one of the first light-exiting surface 2112 and the second light-incident surface 2121 may be a curved surface. Both the first light-exiting surface 2112 and the second light-incident surface 2121 in FIG. 8 being curved surfaces is taken as an example. The focus driving mechanism 26 may be configured to drive the first sub-prism 211 to move close to or away from the second sub-prism 212. Under the drive of the focus driving mechanism 26, the moving direction (the double arrow direction shown in FIG. 8) of the first sub-prism 211 relative to the second sub-prism 212 may be perpendicular to the tangent planes at the centers of the first light-exiting surface 2112 and the second light-incident surface 2121, i.e., the moving direction may be perpendicular to the line connecting the two ends of the first light-exiting surface 2112 and the line connecting the two ends of the second light-incident surface 2121 on the cross section of the light-guiding prism 21. Thus, the curved surfaces arranged on the light-guiding prism 21 makes it possible to achieve optical focusing function by driving a part of the light-guiding prism 21 (e.g., the first sub-prism 211) to move along a direction inclined to the axis of the lens assembly 24. The optical focusing function of the camera module 20 may be achieved via the movement of the first sub-prism 211 along a direction inclined to the axis of the lens assembly 24, so that a part of the focus travel corresponding to the thickness direction of the electronic device 10 may be converted into a travel component perpendicular to the thickness direction of the electronic device 10, thereby conducive to reducing the occupied space of the focus travel in the thickness direction of the electronic device 10, conducive to further reducing the occupied space of the camera module 20 in the thickness direction of the electronic device 10, and conducive to the thin and light design requirements of the electronic device 10.

It may be understood that in a case where the lens assembly 24 is arranged in the camera module 20, the focus driving mechanism 26 may be configured to drive the lens assembly 24 and the first sub-prism 211 to synchronously move relative to the second sub-prism 212 along a direction inclined to the axis of the lens assembly 24 to achieve the optical focusing function of the camera module 20. For example, the first sub-prism 211 and the lens assembly 24 may be arranged on a same carrier, and the carrier of the first sub-prism 211 and the lens assembly 24 is driven to move by the focus driving mechanism 26 such as a voice coil motor, which is conducive to maintaining good imaging quality during focusing.

As shown in FIG. 9, in some embodiments, at least one of the second light-exiting surface 2122 and the third light-incident surface 2131 may be a curved surface. For example, each of the second light-exiting surface 2122 and the third light-incident surface 2131 may be a curved surface. The focus driving mechanism 26 may be configured to drive the third sub-prism 213 to move close to or away from the second sub-prism 212. Under the drive of the focus driving mechanism 26, the moving direction (the double arrow direction shown in FIG. 9) of the third sub-prism 213 relative to the second sub-prism 212 may be perpendicular to the tangent planes at the centers of the second light-exiting surface 2122 and the third light-incident surface 2131, i.e., the moving direction may be perpendicular to the line connecting the two ends of the second light-exiting surface 2122 and the line connecting the two ends of the third light-incident surface 2131 on the cross section of the light-guiding prism 21. With this arrangement and the design of the curved surfaces in the light-guiding prism 21, the optical focusing function of the camera module 20 may be achieved via the movement of the third sub-prism 213 along a direction inclined to the axis of the lens assembly 24, so that a part of the focus travel corresponding to the thickness direction of the electronic device 10 may be converted into a travel component perpendicular to the thickness direction of the electronic device 10, thereby conducive to reducing the occupied space of the focus travel in the thickness direction of the electronic device 10, conducive to further reducing the occupied space of the camera module 20 in the thickness direction of the electronic device 10, and conducive to the thin and light design requirements of the electronic device 10.

Similarly, in a case where the focus driving mechanism 26 is configured to drive the third sub-prism 213 to move, the focus driving mechanism 26 may be configured to drive the third sub-prism 213 and the image sensor 23 to synchronously move relative to the second sub-prism 212. For example, the third sub-prism 213 and the image sensor 23 may be arranged on a same carrier, and the third sub-prism 213 and the image sensor 23 may be driven to move synchronously by the focus driving mechanism 26 such as a voice coil motor to maintain good imaging quality during focusing.

As shown in FIG. 2, in some embodiments, the camera module 20 may include an optical filter 28 located between the third light-exiting surface 2132 and the image sensor 23. The optical filter 28 may include, but is not limited to, an infrared cut optical filter. The optical filter 28 may be configured to filter out interfering light and prevent interfering light from reaching the image sensor 23 and affecting the imaging quality of the camera module 20. The electronic device 10 and the camera module 20 may include any other suitable components to achieve corresponding functions, which are not limited in the present disclosure.

In some embodiments, the camera module 20 may include a base. The base may serve as a carrying and supporting structural component for components in the camera module 20. The light-guiding prism 21 may be arranged on the base, and the first light-incident surface 2111, the second flat surface 2124, and the third light-exiting surface 2132 may be exposed from the base. The focus driving mechanism 26 may be arranged on the base. The lens assembly 24 may be movably arranged in the focus driving mechanism 26 and may face the first sub-prism 211. The anti-shake driving mechanism 27 may be arranged on the base. The image sensor 23 may be movably arranged on the anti-shake driving mechanism 27 and may face the third sub-prism 213. The optical filter 28 may be arranged on the anti-shake driving mechanism 27 and located between the third sub-prism 213 and the image sensor 23. Thus, while ensuring smooth light propagation, the base may integrate various components of the camera module 20 into a whole, which is conducive to improving assembly accuracy and reliability between the components and improving the imaging quality.

In some embodiments, a tangent surface may be arranged between the first light-incident surface 2111 and the first reflecting surface 2113, and another tangent surface may be arranged between the third light-exiting surface 2132 and the third reflecting surface 2133. These tangent surfaces may be parallel to the axis of the lens assembly 24. These tangent surfaces arranged at the two outermost parts of the camera module 20 are conducive to reducing the length size of the camera module 20 and reducing the risk of sharp corners being damaged due to collision, thereby conducive to improving the structural reliability of the light-guiding prism 21. In some embodiments, an anti-reflection film may be arranged on each of the first light-incident surface 2111 and the third light-exiting surface 2132 to improve light transmittance and the imaging quality of the camera module 20. In some embodiments, a light-blocking structure such as ink may be arranged on the second flat surface 2124 to block and absorb stray light, thereby improving the imaging quality of the camera module 20. In some embodiments, a light-blocking structure such as screen printing may be arranged on areas other than effective imaging areas on surfaces such as the first reflecting surface 2113, the third reflecting surface 2133, the first light-incident surface 2111, the second flat surface 2124, the third light-exiting surface 2132, and the second reflecting surface 2123 to reduce stray light in the camera module 20 and improve imaging quality of the camera module 20.

The following describes the lens assembly 24 and the curved surfaces of the light-guiding prism 21 in the camera module 20 in some embodiments.

As shown in FIG. 10, in some embodiments, each of the first light-exiting surface 2112, the second light-incident surface 2121, the second light-exiting surface 2122, and the third light-incident surface 2131 may be a curved surface and a spherical surface. The number of the lens 241 having focal power in the lens assembly 24 may be greater than or equal to 2. The surfaces of the light-guiding prism 21 that are curved surfaces may be configured to be spherical surfaces, which is conducive to reducing the arrangement difficulty and cost of the light-guiding prism 21. In addition, at least two lenses 241 in the lens assembly 24, in cooperation with the curved surfaces in the light-guiding prism 21, may improve the imaging quality of the camera module 20.

In some embodiments, in the direction along the axial direction of the lens assembly 24 pointing from the lens assembly 24 toward the first light-incident surface 2111, the lens assembly 24 may include a first lens L1 and a second lens L2 sequentially arranged in the lens assembly 24. Each of the object-side surface and image-side surface of the first lens L1, the object-side surface and image-side surface of the second lens L2, the first light-exiting surface 2112, the second light-incident surface 2121, the second light-exiting surface 2122, and the third light-incident surface 2131 may be a curved surface. Each of the object-side surface and the image-side surface of the second lens L2 may be an aspherical surface. With this arrangement, the first lens L1 and the second lens L2 may be cooperate with the curved surfaces in the light-guiding prism 21, and each of the object-side surface and the image-side surface of the second lens L2 may be an aspherical surface, thereby effectively improving the imaging quality of the camera module 20, and making it unnecessary for the light-guiding prism 21 to have an aspherical surface, thereby conducive to reducing the manufacturing difficulty and cost of the light-guiding prism 21.

In some embodiments, the first lens L1 may have positive focal power, and the second lens L2 may have negative focal power. The object-side surface of the first lens L1 may be a convex surface. The object-side surface of the second lens L2 may have a convex surface near the optical axis, and the image-side surface of the second lens L2 may have a concave surface near the optical axis. The first light-exiting surface 2112 may be a concave surface. Each of the second light-incident surface 2121 and the second light-exiting surface 2122 may be a convex surface. The third light-incident surface 2131 may be a concave surface.

With this arrangement, the positive focal power of the first lens L1 and the convex surface shape of the object-side surface of the first lens L1 may cooperate to effectively converge light incident on the lens assembly 24, which is conducive to reducing the total track length of the camera module 20. The negative focal power of the second lens L2 and convex-concave surface shape of the second lens L2 may cooperate with the focal power and surface shape of the first lens L1 to smoothly transition the light collected by the first lens L1, thereby suppressing the generation of aberration and improving the imaging quality of the camera module 20. The concave surface shape of the first light-exiting surface 2112 may cooperate with the convex surface shape of the second light-incident surface 2121, and the convex surface shape of the second light-exiting surface 2122 may cooperate with the concave surface shape of the third light-incident surface 2131, so that the light-guiding prism 21 may not only effectively cooperate with the focal power and surface shapes of the first lens L1 and the second lens L2 to smoothly transition the light and improve the imaging quality of the camera module 20, but also is conducive to improving the surface shape compatibility of each pair of curved surfaces that face each other in the light-guiding prism 21, thereby reducing the risk of curved surfaces that face each other interfering with each other, conducive to the assembly yield of the light-guiding prism 21 and reducing occupied space of the light-guiding prism 21.

In the embodiments of the present disclosure, the object-side surface of the lens assembly 241 may be understood as the surface of the lens 241 away from the light-guiding prism 21. The image-side surface of the lens 241 may be understood as the surface of the lens 241 close to the light-guiding prism 21.

FIG. 10 shows a structural schematic view of the camera module 20 according to a first embodiment of the present disclosure. In the first embodiment, the first lens L1 may have positive focal power. The object-side surface of the first lens L1 may be a spherical surface and a convex surface. The image-side surface of the first lens L1 may be a spherical surface and a convex surface. The object-side surface of the second lens L2 may be an aspherical surface and a convex surface. The image-side surface of the second lens L2 may be an aspherical surface and a concave surface. The first light-exiting surface 2112 may be a spherical surface and a concave surface. The second light-incident surface 2121 may be a spherical surface and a convex surface. The second light-exiting surface 2122 may be a spherical surface and a convex surface. The third light-incident surface 2131 may be a spherical surface and a concave surface.

The reference wavelength for the focal length, the refractive index, and the Abbe number of each lens 241 in the first embodiment may be 555 nm, which are applied to other embodiments. The parameters of the camera module 20 in the first embodiment are given in Table 1 below. The components from the object surface to the imaging surface S13 along the light propagation direction are arranged in the order from top to bottom in Table 1. S1 represents the object-side surface of the first lens L1, and S2 represents the image-side surface of the first lens L1. S3 represents the object-side surface of the first lens L2, and S4 represents the image-side surface of the first lens L2. S5 represents the first light-incident surface 2111. S6 represents the first light-exiting surface 2112. S7 represents the second light-incident surface 2121. S8 represents the second light-exiting surface 2122. S9 represents the third light-incident surface 2131. S10 represents the third light-exiting surface 2132. S11 represents the object-side surface of the optical filter 28, and S12 represents the image-side surface of the optical filter 28. S13 represents the imaging surface. The "Y Radius" in Table 1 is the radius of curvature of the surface corresponding to the corresponding surface number at the optical axis. In the "Thickness" parameter column for the first lens L1, the first value is the thickness of the first lens L1 along the optical axis, and the second value is the distance along the optical axis from the image-side surface of the first lens L1 to the next surface (the object-side surface of the second lens L2) in the image side direction. The second lens L2 is similar to the first lens L1. In the "Thickness" parameter column for the first sub-prism 211, the first value is the path length (between the first light-incident surface 2111 and the first light-exiting surface 2112) traveled by the light in the first sub-prism 211, and the second value is the distance along the optical axis from the first light-exiting surface 2112 to the next surface (the second light-incident surface 2121). The meanings of other parameters may be understood with reference to the above description.

**Table 1**

| Surface Number | Surface Name | Surface Type | Y Radius (mm) | Thickness (mm) | Refractive Index | Abbe Number | Focal Length (mm) |
|---|---|---|---|---|---|---|---|
| | Object surface | Spherical | Infinity | Infinity | | | |
| | Diaphragm | Spherical | Infinity | -1.8 | | | |
| S1 | First Lens | Spherical | 7.5991 | 2.95 | 1.569 | 71.30 | 13.244 |
| S2 | | Spherical | -1148.08 | 0.0504 | | | |
| S3 | Second Lens | Aspherical | 27.1144 | 1.1 | 1.567 | 37.56 | -26.208 |
| S4 | | Aspherical | 9.4877 | 1.3996 | | | |
| S5 | First Sub-prism | Spherical | Infinity | 10.2 | 1.697 | 55.46 | -12.874 |
| S6 | | Spherical | 9.0000 | - | | | |
| S7 | Second Sub-prism | Spherical | 9.0000 | 10.4 | 1.517 | 52.15 | 10.799 |
| S8 | | Spherical | -9.0000 | - | | | |
| S9 | Third Sub-prism | Spherical | -9.0000 | 10.2 | 1.90 | 37.37 | -9.947 |
| S10 | | Spherical | Infinity | 0.8 | | | |
| S11 | Optical Filter | Spherical | Infinity | 0.2100 | 1.517 | 64.20 | Infinity |
| S12 | | Spherical | Infinity | 0.492 | | | |
| S13 | Imaging surface | Spherical | Infinity | 0.0000 | | | |

In the first embodiment and the following embodiments, the optical filter 28 may not be arranged in the camera module 20, and the distance between the third light-exiting surface 2132 and the imaging surface may remain unchanged.

The aspherical coefficients of the object-side surface and image-side surface of the second lens L2 in the first embodiment are given in Table 2 below. The surface number S3 represents the object-side surface of the second lens L2, and the surface number S4 represents the image-side surface of the second lens L2, which are applied to other embodiments. From top to bottom in Table 2, K-A12 represent the types of aspherical coefficients. K represents the conic coefficient, A4 represents the fourth-order aspherical coefficient, A6 represents the sixth-order aspherical coefficient, A8 represents the eighth-order aspherical coefficient, A10 represents the tenth-order aspherical coefficient, and A12 represents the twelfth-order aspherical coefficient, which are applied to other embodiments. Additionally, the aspherical coefficient formula is as follows: $Z = \frac{{cr}^{2}}{1 + \sqrt{1 - \left(K+1\right) {c}^{2} {r}^{2}}} + {\sum }_{i} Ai {r}^{i}$

Z represents the distance from a corresponding point on the aspherical surface to a plane tangent to the surface vertex, r represents the distance from a corresponding point on the aspherical surface to the optical axis, c represents the curvature at the vertex of the aspherical surface, K represents the conic coefficient, and Ai represents the coefficient corresponding to the i-th high-order term in the aspherical surface shape formula, which are applied to other embodiments.

**Table 2**

| Surface Number | S3 | S4 |
|---|---|---|
| K | 2.1287E+01 | 2.7420E+00 |
| A4 | 5.0519E-04 | 8.3936E-04 |
| A6 | -2.4546E-05 | -2.0932E-05 |
| A8 | 5.2230E-07 | 4.6834E-07 |
| A10 | -1.4068E-08 | -3.0110E-09 |
| A12 | 8.4766E-11 | -6.9396E-10 |

In the first embodiment, the focal length of the camera module 20 may be f = 34.8 mm. At infinity, the total track length of the camera module 20 may be TTL = 37.802 mm, the thickness (the size along the axial direction of the lens assembly 24) of the light-guiding prism 21 may be 4.4 mm, the back focal length of the camera module 20 may be BFL = 1.502 mm, the field of view angle at the maximum image height may be FOV = 13.4°, and the F-number may be FNO = 3.494. The camera module 20 may achieve good imaging quality, sufficient field of view angle and amount of light, and miniaturization design.

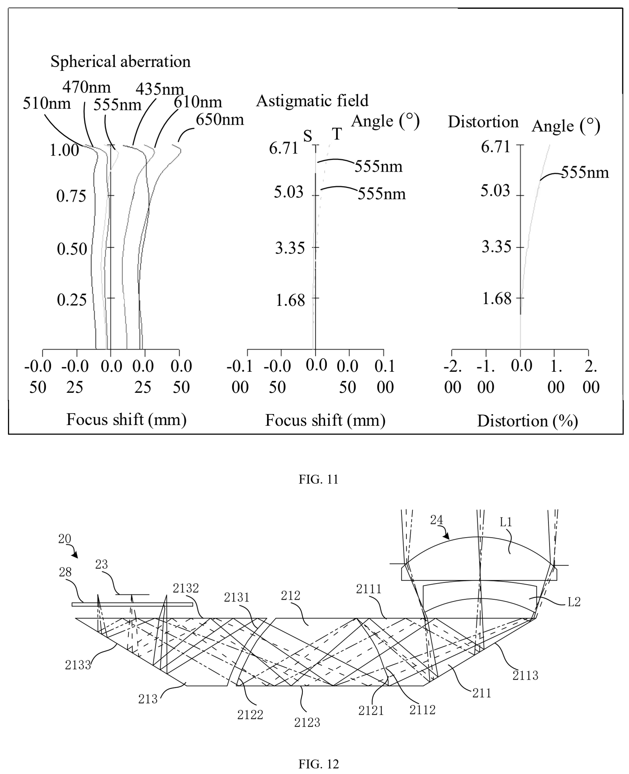

As shown in FIG. 11. FIG. 11 sequentially shows, from left to right, a longitudinal spherical aberration curve graph, an astigmatic field curve graph, and a distortion curve graph of the camera module 20 in the first embodiment. In the longitudinal spherical aberration curve graph. The vertical axis represents the normalized pupil coordinate from the pupil center to the pupil edge. The horizontal axis represents the focus shift, i.e., the distance from the imaging surface to the intersection point of the light with the optical axis. From the longitudinal spherical aberration curve graph, it can be seen that the convergence focus shift of lights of various wavelengths in the first embodiment tends to be consistent, and the diffuse spot or chromatic halo in the imaging image is effectively suppressed. In the astigmatic field curve graph, the horizontal axis represents the focus shift, and the vertical axis represents the field of view angle. The curve S in the astigmatic field curve graph represents the sagittal field curvature at 555 nm, and the curve T represents the tangential field curvature at 555 nm. From the astigmatic field curve graph, it can be seen that the field curvature of the camera module 20 is low. The field curvature and astigmatic field at the fields of view are well corrected, and both the center and edge of the fields of view have clear imaging. In the distortion curve graph, the distortion curve represents the distortion values corresponding to different field of view angles, where the horizontal axis represents the distortion value, and the vertical axis represents the field of view angle. From the distortion curve graph, it can be seen that the image deformation caused by the chief light in the camera module 20 is low, and the imaging quality is excellent.

As shown in FIG. 12, FIG. 12 shows a structural schematic view of the camera module 20 in a second embodiment. In the second embodiment, the first lens L1 may have positive focal power. The object-side surface of the first lens L1 may be a spherical surface and a convex surface. The image-side surface of the first lens L1 may be a spherical surface and a concave surface. The object-side surface of the second lens L2 may be an aspherical surface and a convex surface. The image-side surface of the second lens L2 may be an aspherical surface and a concave surface. The first light-exiting surface 2112 may be a spherical surface and a concave surface. The second light-incident surface 2121 may be a spherical surface and a convex surface. The second light-exiting surface 2122 may be a spherical surface and a convex surface. The third light-incident surface 2131 may be a spherical surface and a concave surface.

The parameters of the camera module 20 in the second embodiment are given in Table 3 below. The meanings of each parameter may be obtained with reference to the first embodiment.

**Table 3**

| Surface Number | Surface Name | Surface Type | Y Radius (mm) | Thickness (mm) | Refractive Index | Abbe Number | Focal Length (mm) |
|---|---|---|---|---|---|---|---|
| | Object surface | Spherical | Infinity | Infinity | | | |
| | Diaphragm | Spherical | Infinity | -1.4 | | | |
| S1 | First Lens | Spherical | 8.8520 | 2.32 | 1.569 | 71.30 | 16.209 |
| S2 | | Spherical | 187.2651 | 0.1191 | | | |
| S3 | Second Lens | Aspherical | 36.641 | 0.6 | 1.615 | 25.92 | -146.45 |
| S4 | | Aspherical | 25.9405 | 1.2609 | | | |
| S5 | First Sub-prism | Spherical | Infinity | 10.2 | 1.835 | 42.73 | -10.735 |
| S6 | | Spherical | 9.0000 | - | | | |
| S7 | Second Sub-prism | Spherical | 9.0000 | 10.4 | 1.517 | 52.15 | 12.294 |
| S8 | | Spherical | -13.2858 | 0.4 | | | |
| S9 | Third Sub-prism | Spherical | -8.5000 | 10.0 | 1.786 | 44.19 | -10.771 |
| S10 | | Spherical | Infinity | 0.8 | | | |
| S11 | Optical Filter | Spherical | Infinity | 0.2100 | 1.517 | 64.20 | Infinity |
| S12 | | Spherical | Infinity | 0.492 | | | |
| S13 | Imaging surface | Spherical | Infinity | 0.0000 | | | |

The aspherical coefficients of the object-side surface and image-side surface of the second lens L2 in the second embodiment are given in Table 4 below. The meanings of each parameter may be obtained with reference to the first embodiment.

**Table 4**

| Surface Number | S3 | S4 |
|---|---|---|
| K | 1.1361E+01 | 4.9249E+00 |
| A4 | 1.4138E-03 | 1.7081E-03 |
| A6 | -7.9352E-06 | 3.8143E-07 |
| A8 | -1.0540E-07 | -1.5858E-07 |
| A10 | 1.4608E-08 | 2.7964E-08 |
| A12 | -3.1806E-10 | -4.0511E-10 |

In the second embodiment, the focal length of the camera module 20 may be f = 34.8 mm. At infinity, the total track length of the camera module 20 may be TTL = 36.802 mm, the thickness (the size along the axial direction of the lens assembly 24) of the light-guiding prism 21 may be 4.4 mm, the back focal length of the camera module 20 may be BFL = 1.502 mm, the field of view angle at the maximum image height may be FOV = 13.4°, and the F-number may be FNO = 3.492. The camera module 20 may achieve good imaging quality, sufficient field of view angle and amount of light, and miniaturization design.

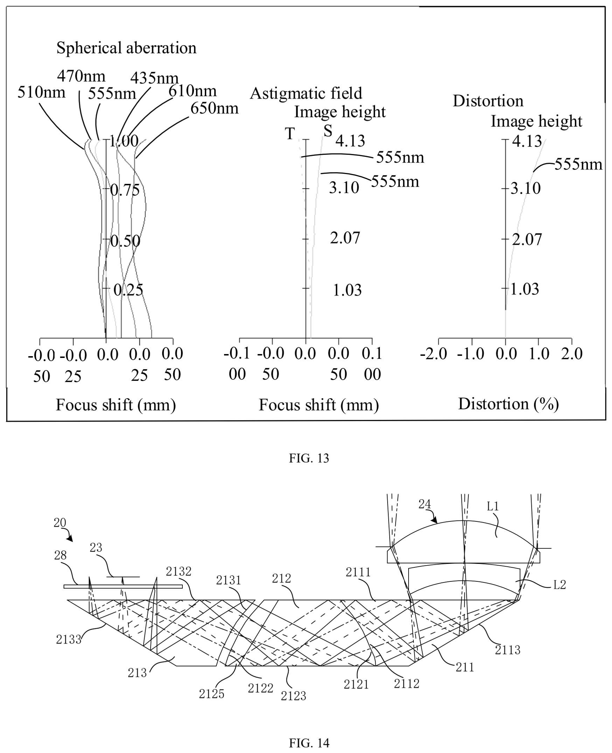

As shown in FIG. 13. FIG. 13 sequentially shows, from left to right, a longitudinal spherical aberration curve graph, an astigmatic field curve graph, and a distortion curve graph of the camera module 20 in the second embodiment. The difference from FIG. 11 is that the vertical axes of the astigmatic field curve graph and distortion curve graph in FIG. 13 represent image height. From FIG. 13, it can be seen that the longitudinal spherical aberration, astigmatic field, and distortion of the camera module 20 are well controlled, and the camera module 20 has good imaging quality.

As shown in FIG. 14, FIG. 14 shows a structural schematic view of the camera module 20 in a third embodiment. The positive/negative focal power, convex/concave surface shape, and spherical/aspherical type of each lens 241 in the third embodiment are the same as that of each lens 241 in the second embodiment. The parameters of the camera module 20 in the third embodiment are given in Table 5 below. The meanings of each parameter may be obtained with reference to the first embodiment.

In the first and second embodiments, each curved surface of the light-guiding prism 21 may be integral with a corresponding sub-prism, i.e., the curved surface may be formed on the sub-prism. The difference from the first and second embodiments is that, in the third embodiment, each of the first light-exiting surface 2112, the second light-incident surface 2121, and the third light-incident surface 2131 may be formed on a corresponding sub-prism, the second light-exiting surface 2122 may be formed on a lens structure 2125 independent of the corresponding sub-prism body, which is conducive to reducing the arrangement difficulty and cost of the second light-exiting surface 2122 and allows constraining the direction of the light by coordinating the refractive index difference between the prism body of the second sub-prism 212 and the lens structure 2125 having the second light-exiting surface 2122, thereby improving the imaging quality of the camera module 20.

**Table 5**

| Surface Number | Surface Name | Surface Type | Y Radius (mm) | Thickness (mm) | Refractive Index | Abbe Number | Focal Length (mm) |
|---|---|---|---|---|---|---|---|
| | Object Surface | Spherical | Infinity | Infinity | | | |
| | Diaphragm | Spherical | Infinity | -1.4 | | | |
| S1 | First Lens | Spherical | 8.9213 | 2.30 | 1.569 | 71.30 | 16.413 |
| S2 | | Spherical | 171.0352 | 0.05 | | | |
| S3 | Second Lens | Aspherical | 41.8938 | 0.68 | 1.615 | 25.92 | -426.50 |
| S4 | | Aspherical | 35.9382 | 1.17 | | | |
| S5 | First Sub-prism | Spherical | Infinity | 10.2 | 1.883 | 40.85 | -10.147 |
| S6 | | Spherical | 9.0000 | - | | | |
| S7 | Second Sub-prism | Spherical | 9.0000 | 9.4 | 1.517 | 64.20 | 17.365 |
| | | Spherical | Infinity | - | | | |
| | | Spherical | Infinity | 1.0 | 1.603 | 38.01 | 22.522 |
| S8 | | Spherical | -13.6552 | 0.4 | | | |
| S9 | | Spherical | -8.5000 | 10.0 | 1.883 | 40.85 | -9.584 |
| S10 | Third Sub-prism | Spherical | Infinity | 0.8 | | | |
| S11 | Optical Filter | Spherical | Infinity | 0.2100 | 1.517 | 64.20 | Infinity |
| S12 | | Spherical | Infinity | 0.494 | | | |
| S13 | Image Plane | Spherical | Infinity | 0.0000 | | | |

The aspherical coefficients of the object-side surface and image-side surface of the second lens L2 in the third embodiment are given in Table 6 below. The meanings of each parameter may be obtained with reference to the first embodiment.

**Table 6**

| Surface Number | S3 | S4 |
|---|---|---|
| K | 1.8431E+01 | -9.7872E+00 |
| A4 | 1.2002E-03 | 1.5352E-03 |
| A6 | 5.3114E-06 | 1.3878E-05 |
| A8 | -4.9485E-07 | -6.0745E-07 |
| A10 | 2.8406E-08 | 4.3901E-08 |
| A12 | -4.4062E-10 | -4.0228E-10 |

In the third embodiment, the focal length of the camera module 20 may be f = 34.8 mm. At infinity, the total track length of the camera module 20 may be TTL = 36.704 mm, the thickness (the size along the axial direction of the lens assembly 24) of the light-guiding prism 21 may be 4.4 mm, the back focal length of the camera module 20 may be BFL = 1.504 mm, the field of view angle at the maximum image height may be FOV = 13.4°, and the F-number may be FNO = 3.492. The camera module 20 may achieve good imaging quality, sufficient field of view angle and amount of light, and miniaturization design.

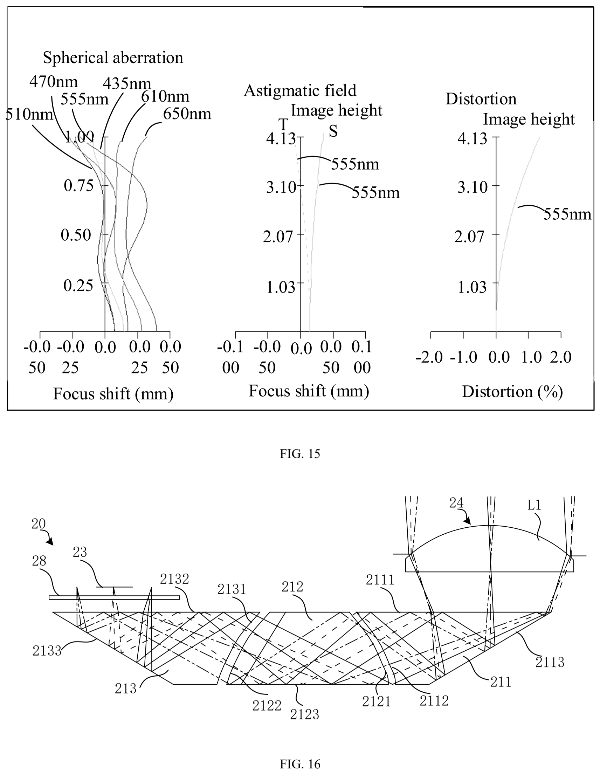

As shown in FIG. 15. FIG. 15 sequentially shows, from left to right, a longitudinal spherical aberration curve graph, an astigmatic field curve graph, and a distortion curve graph of the camera module 20 in the third embodiment. From FIG. 15, it can be seen that the longitudinal spherical aberration, astigmatic field, and distortion of the camera module 20 are well controlled, and the camera module 20 has good imaging quality.

Based on the above first, second, and third embodiments, in some embodiments, the camera module 20 may meet the conditional formula: 1.1≤R3/R4≤2.9; wherein R3 is the radius of curvature of the object-side surface of the second lens L2 at the optical axis, and R4 is the radius of curvature of the image-side surface of the second lens L2 at the optical axis. For example, R3/R4 may be 1.1, 1.5, 1.7, 2, 2.3, 2.5, or 2.9. In a case where the above conditional formula is met, the radius of curvature of each of the object-side and image-side surfaces of the second lens L2 may be reasonably configured, so that the second lens L2 is capable of smoothly transitioning the light and constraining the path of the light in the second lens L2, thereby effectively suppressing the generation of aberrations in cooperation with the first lens L1 and the curved surfaces in the light-guiding prism 21 and improving the imaging quality of the camera module 20.

As shown in FIG. 16, in some embodiments, at least two of the first light-exiting surface 2112, the second light-incident surface 2121, the second light-exiting surface 2122, and the third light-incident surface 2131 may be aspherical surfaces. The number of the lens 241 having focal power in the lens assembly 24 may be 1. With this arrangement, at least two curved surfaces in the light-guiding prism 21 may be aspherical surfaces, so that the light adjustment effect of the light-guiding prism 21 may be improved, and the light-guiding prism 21 is capable of better sharing the light adjustment burden of the lens assembly 24, which is conducive to further reducing the number of the lens 241 in the lens assembly 24. For example, the number of the lens 241 having focal power in the lens assembly 24 may be 1, thereby conducive to further reducing the size of the camera module 20 in the axial direction of the lens assembly 24.

In some embodiments, the number of the lens 241 having focal power in the lens assembly 24 may be 1. The lens assembly 24 may include a first lens L1. Each of the object-side surface and image-side surface of the first lens L1, the first light-exiting surface 2112, the second light-incident surface 2121, the second light-exiting surface 2122, and the third light-incident surface 2131 may be a curved surface. Each of the object-side surface and image-side surface of the first lens L1, the second light-incident surface 2121, and the second light-exiting surface 2122 may be an aspherical surface. Two aspherical surfaces of the light-guiding prism 21 may be arranged on the second sub-prism 212, which is conducive to reducing the manufacturing difficulty of the light-guiding prism 21 and reducing manufacturing cost.

As shown in FIG. 16. FIG. 16 shows a structural schematic view of the camera module 20 in a fourth embodiment of the present disclosure. In the fourth embodiment, each of the object-side surface and image-side surface of the first lens L1, the second light-incident surface 2121, and the second light-exiting surface 2122 may be an aspherical surface. The first lens L1 may have positive focal power. The object-side surface of the first lens L1 may have a convex surface near the optical axis. The first light-exiting surface 2112 may be a spherical surface and a concave surface. Each of the second light-incident surface 2121 and the second light-exiting surface 2122 may be an aspherical surface and a convex surface. The third light-incident surface 2131 may be a spherical surface and a concave surface. The positive focal power and convex-concave surface shape of the first lens L1 may effectively converge light and reduce the total track length of the camera module 20, and reduce introducing relatively severe distortion and other aberrations. The first lens L1 may cooperate with the curved surfaces in the light-guiding prism 21 to effectively improve the imaging quality of the camera module 20.

The parameters of the camera module 20 in the fourth embodiment are given in Table 7 below. The meanings of each parameter may be obtained with reference to the first embodiment.

**Table 7**

| Surface Number | Surface Name | Surface Type | Y Radius (mm) | Thickness (mm) | Refractive Index | Abbe Number | Focal Length (mm) |
|---|---|---|---|---|---|---|---|
| | Object Surface | Spherical | Infinity | Infinity | | | |
| | Diaphragm | Spherical | Infinity | -1.4 | | | |
| S1 | First Lens | Aspherical | 9.3597 | 2.86 | 1.497 | 81.53 | 15.536 |
| S2 | | Aspherical | -39.9282 | 1.04 | | | |
| S5 | First Sub-prism | Spherical | Infinity | 9.8 | 1.835 | 42.73 | -10.273 |
| S6 | | Spherical | 8.6127 | 0.4 | | | |
| S7 | Second Sub-prism | Aspherical | 12.0979 | 10.4 | 1.516 | 63.99 | 14.512 |
| S8 | | Aspherical | -13.9819 | 0.4 | | | |
| S9 | Third Sub-prism | Spherical | -8.5000 | 9.8 | 1.697 | 55.46 | -12.159 |
| S10 | | Spherical | Infinity | 0.8 | | | |
| S11 | Optical Filter | Spherical | Infinity | 0.2100 | 1.517 | 64.20 | Infinity |
| S12 | | Spherical | Infinity | 0.49 | | | |
| S13 | Imaging Surface | Spherical | Infinity | 0.0000 | | | |

The aspherical coefficients of the object-side surface and image-side surface of the first lens L1, the second light-incident surface 2121, and the second light-exiting surface 2122 in the fourth embodiment are given in Table 8 below. S1 represents the object-side surface of the first lens L1, and S2 represents the image-side surface of the first lens L1. S7 represents the second light-incident surface 2121. S8 represents the second light-exiting surface 2122. The meanings of other parameters may be obtained with reference to the first embodiment.

**Table 8**

| Surface Number | S1 | S2 | S7 | S8 |
|---|---|---|---|---|
| K | 1.3042E+00 | -7.3386E+00 | 0 | 0 |
| A4 | -2.1249E-04 | 8.4561E-05 | -2.7806E-04 | -3.8104E-04 |
| A6 | -4.5955E-06 | 4.1271E-07 | 2.2385E-05 | 1.9332E-05 |
| A8 | 1.3911E-07 | 2.1390E-07 | -5.8668E-06 | -1.8010E-06 |
| A10 | -1.0457E-08 | -1.3728E-08 | 4.7288E-07 | -5.2075E-08 |
| A12 | 1.6342E-10 | 3.9089E-10 | -1.4840E-08 | 7.1219E-09 |

In the fourth embodiment, the focal length of the camera module 20 may be f = 34.8 mm. At infinity, the total track length of the camera module 20 may be TTL = 36.2 mm, the thickness (the size along the axial direction of the lens assembly 24) of the light-guiding prism 21 may be 4.4 mm, the back focal length of the camera module 20 may be BFL = 1.5 mm, the field of view angle at the maximum image height may be FOV = 13.5°, and the F-number may be FNO = 3.492. The camera module 20 may achieve good imaging quality, sufficient field of view angle and amount of light, and miniaturization design.

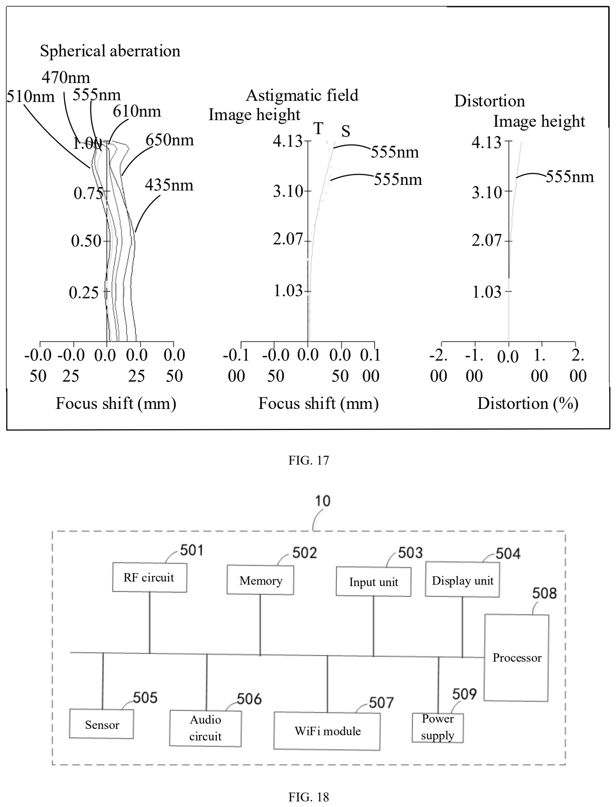

As shown in FIG. 17. FIG. 17 sequentially shows, from left to right, a longitudinal spherical aberration curve graph, an astigmatic field curve graph, and a distortion curve graph of the camera module 20 in the fourth embodiment. From FIG. 17, it can be seen that the longitudinal spherical aberration, astigmatic field, and distortion of the camera module 20 are well controlled, and the camera module 20 has good imaging quality.

In some embodiments, the lens assembly 24 may include a diaphragm. The diaphragm may be arranged on the object side of the first lens L1, for example, the diaphragm may be arranged on the object-side surface of the first lens L1. The diaphragm is arranged front and is in cooperation with the curved surfaces in the camera module 20, which is conducive to further suppressing the generation of aberrations and improving the imaging quality of the camera module 20.

Based on the above first, second, third, and fourth embodiments, in some embodiments, the camera module 20 may meet the conditional formulas: 0.7≤R6/R7≤1.1; 0.9≤R8/R9≤1.7; wherein R6 is the radius of curvature of the first light-exiting surface 2112, R7 is the radius of curvature of the second light-incident surface 2121 at the optical axis, R8 is the radius of curvature of the second light-exiting surface 2122 at the optical axis, and R9 is the radius of curvature of the third light-incident surface 2131. For example, R6/R7 may be 0.7, 0.8, 0.9, 1, or 1.1. R8/R9 may be 0.9, 1.3, 1.5, 1.6, or 1.7. In a case where the above conditional formulas are met, the four curved surfaces arranged in the light-guiding prism 21 may share the light adjustment burden of the lens assembly 24, the surface shape compatibility the between the first light-exiting surface 2112 and the second light-incident surface 2121, and between the second light-exiting surface 2122 and the third light-incident surface 2131 may be improved, which is conducive to reducing the assembly difficulty of the light-guiding prism 21 and reducing occupied space of the light-guiding prism 21.

In some embodiments, the camera module 20 may meet the conditional formula: T≤10 mm; wherein T is the size of the camera module 20 along the axial direction of the lens assembly 24, i.e., T is the distance along the axial direction of the lens assembly 24 from the object-side surface of the first lens L1 to the second reflecting surface 2123, which is also the thickness size of the camera module 20. In the camera module 20 in some embodiments of the present disclosure, multiple curved surfaces may be arranged in the light-guiding prism 21 to share the light adjustment burden of the lens assembly 24, so that the number of lenses in the lens assembly 24 may be reduced. Thus, the size of the camera module 20 along the axial direction of the lens assembly 24 may meet the above conditional formula. In this way, good imaging quality may be achieved, and the thickness size of the camera module 20 may be effectively reduced, thereby achieving miniaturization design of the camera module 20 and conducive to meeting the thin and light design requirements of the electronic device 10.

The camera module 20 in the above embodiments may meet the data in Table 9 below. The effects that may be achieved by meeting the following data may be obtained with reference to the above descriptions.

**Table 9**

| Parameter | First Embodiment | Second Embodiment | Third Embodiment | Fourth Embodiment |
|---|---|---|---|---|
| R3/R4 | 2.858 | 1.413 | 1.166 | |
| R6/R7 | 1 | 1 | 1 | 0.712 |
| R8/R9 | 1 | 1.563 | 1.606 | 1.645 |
| T | 9.9 | 8.7 | 8.6 | 8.3 |

As shown in FIG. 18, FIG. 18 is a structural schematic view of an electronic device 10 according to some embodiments of the present disclosure. The electronic device 10 may include a radio frequency (RF) circuit 501, a memory 502 including at least one computer-readable storage medium, an input unit 503, a display unit 504, a sensor 505, an audio circuit 506, a wireless fidelity (WiFi) module 507, a processor 508 including at least one processing core, and a power supply 509, etc. Those skilled in the art may understand that the structure of the electronic device 10 shown in FIG. 18 does not limit the electronic device 10. The electronic device 10 may include more or fewer components than the electronic device 10 illustrated in FIG. 18, or combine some components, or have different component arrangements.

The RF circuit 501 may be configured to transmit and receive information, or transmit and receive signal during calling. In some embodiments, after receiving downlink information from a base station, the RF circuit 501 may hand the downlink information over to at least one processor 508 for processing. Additionally, the RF circuit 501 may transmit uplink data to the base station. The RF circuit 501 may include, but is not limited to, an antenna, at least one amplifier, a tuner, at least one oscillator, a subscriber identity module (SIM) card, a transceiver, a coupler, a low noise amplifier (LNA), and a duplexer, etc. Furthermore, the RF circuit 501 may communicate with networks and other devices via wireless communication. This wireless communication may use any communication standard or protocol, including but not limited to a global system of mobile communication (GSM), a general packet radio service (GPRS), a code division multiple access (CDMA), a wideband code division multiple access (WCDMA), a long term evolution (LTE), an email, or short messaging service (SMS), etc.

The memory 502 may be configured to store applications and data. The application programs stored in the memory 502 may include executable code. The application programs may form various functional modules. The processor 508 may executes various functional applications and data processing by running the application programs stored in the memory 502. The memory 502 may include a program storage area and a data storage area. The program storage area may store an operating system, and application programs required for at least one function (such as a sound playback function, and an image playback function, etc.), etc. The data storage area may store data (such as audio data, and phonebook, etc.) created based on the use of the electronic device 10. Furthermore, the memory 502 may include a high-speed random access memory, a non-volatile memory such as at least one magnetic disk storage device, a flash memory device, or other volatile solid-state storage devices. Correspondingly, the memory 502 may include a memory controller to enable the processor 508 and the input unit 503 to access to the memory 502.

The input unit 503 may be configured to receive input numbers, character information, or user characteristic information (such as fingerprints), and generate keyboard, mouse, joystick, optical, or trackball signal inputs related to user settings and function control. In some embodiments, the input unit 503 may include a touch-sensitive surface and other input devices. The touch-sensitive surface, also called a touch display screen or a touch panel, may be configured to collect touch operations by the user on or near it (such as operations by the user using a finger, stylus, or any suitable object or accessory on or near the touch-sensitive surface) and drive corresponding connection devices based on preset programs. In some embodiments, the touch-sensitive surface may include two parts, i.e., a touch detection device and a touch controller. The touch detection device may be configured to detect the user's touch orientation, detect signals brought by the touch operation, and transmit the signals to the touch controller. The touch controller may be configured to receive touch information from the touch detection device, convert the touch information into contact coordinates, and send the contact coordinates to the processor 508, and receive and execute commands from the processor 508.

The display unit 504 may be configured to display information input by the user or information provided to the user, and various graphical user interfaces of the electronic device 10. These graphical user interfaces may include graphics, text, icons, video, and any combination thereof. The display unit 504 may include a display panel. In some embodiments, a liquid crystal display (LCD), an organic light-emitting diode (OLED), or other forms may be configured to configure the display panel. Further, the touch-sensitive surface may cover the display panel. In a case where the touch-sensitive surface detects a touch operation on or near it, the touch-sensitive surface may transmit the touch operation to the processor 508 to determine the type of touch event. Subsequently, the processor 508 may provide corresponding visual output on the display panel based on the type of touch event. In FIG. 18, although the touch-sensitive surface and the display panel are implemented as two independent components to achieve input and output functions, in some embodiments, the touch-sensitive surface and the display panel may be integrated to achieve input and output functions.

The electronic device 10 may include at least one type of sensor 505, such as a light sensor, a motion sensor, and other sensors. In some embodiments, the light sensor may include an ambient light sensor and a proximity sensor. The ambient light sensor may be configured to adjust the brightness of the display panel based on the ambient light intensity. The proximity sensor may be configured to turn off the display panel and/or backlight in a case where the electronic device 10 is moved to a location near the ear. As a type of motion sensor, a gravity acceleration sensor may be configured to detect the magnitude of acceleration in various directions (three axes). In a case where the gravity acceleration sensor is stationary, it may detect the magnitude and direction of gravity. The gravity acceleration sensor may be used in applications for recognizing the posture (such as landscape/portrait switching, related games, magnetometer posture calibration) of the mobile phone, and used in vibration recognition-related functions (such as pedometer, tapping), etc. As for other sensors that may be arranged in the electronic device 10, such as a gyroscope, a barometer, a hygrometer, a thermometer, and an infrared sensor, etc., they will not be repeated here.

The audio circuit 506 may provide an audio interface between the user and the electronic device 10 via a speaker and a microphone. The audio circuit 506 may be configured to convert received audio data into electrical signals and transmit them to the speaker, and the speaker may be configured to convert the electrical signals into sound signals for output. On the other hand, the microphone may be configured to convert collected sound signals into electrical signals, and electrical signals may be configured to be received by the audio circuit 506 and converted into audio data. The audio data may be configured to be output to the processor 508 for processing. After processing, the audio data may be configured to be sent via the RF circuit 501 to another electronic device 10, or output to the memory 502 for further processing. The audio circuit 506 may include an earphone jack to provide communication between an external earphone and the electronic device 10.

The WiFi is a short-range wireless transmission technology. The electronic device 10 may be configured to help users send and receive emails, browse web pages, and access streaming media through the WiFi module 507. The WiFi module 507 may provide users with wireless broadband internet access. Although FIG. 18 shows the WiFi module 507, it may be understood that the WiFi module 507 is not a necessary component of the electronic device 10 and may be omitted as needed without changing the essence of the present disclosure.

The processor 508 is the control center of the electronic device 10. The processor 508 may connect various parts of the entire electronic device 10 via various interfaces and lines. By running or executing application programs stored in the memory 502 and calling data stored in the memory 502, the processor 508 may perform various functions of the electronic device 10 and process data, thereby overall monitoring the electronic device 10. In some embodiments, the processor 508 may include at least one processing core. In some embodiments, the processor 508 may integrate an application processor and a modem processor. The application processor may handle the operating system, user interface, and application programs, etc. The modem processor may handle wireless communication. It may be understood that the aforementioned modem processor may not be integrated into the processor 508.

The electronic device 10 may include a power supply 509 that supplies power to various components. In some embodiments, the power supply 509 may be logically connected to the processor 508 via a power management system to achieve functions such as charging, discharging, and power consumption management via the power management system. The power supply 509 may also include at least one direct current or alternating current power source, a recharging system, a power failure detection circuit, a power converter or an inverter, a power status indicator, and any other components.

Although not shown in FIG. 18, the electronic device 10 may include a Bluetooth module, etc., which will not be repeated here. During implementation, the above modules may be implemented as independent entities or combined arbitrarily as one or several entities. The implementation of the above modules may refer to the above method embodiments and will not be repeated here.

In some embodiments, a camera module is provided and includes an image sensor; and a light-guiding prism, including at least two sub-prisms arranged separately; one sub-prism of the at least two sub-prisms faces the image sensor, the light-guiding prism is configured such that: light incident on another sub-prism of the at least two sub-prisms is capable of being sequentially reflected by the at least two sub-prisms, exiting from the one sub-prism facing the image sensor, and reaching the image sensor; at least one of two surfaces that face each other and are arranged on the at least two sub-prisms is a curved surface.

In some embodiments, the light-guiding prism includes a first sub-prism, a second sub-prism, and a third sub-prism; the first sub-prism has a first light-incident surface and a first light-exiting surface, and a plane where the first light-incident surface is located and a plane where the first light-exiting surface is located form an angle; the second sub-prism has a second light-incident surface and a second light-exiting surface, and a plane where the second light-incident surface is located and a plane where the second light-exiting surface is located form an angle; the third sub-prism has a third light-incident surface and a third light-exiting surface, and a plane where the third light-incident surface is located and a plane where the third light-exiting surface is located form an angle; the first light-exiting surface and the second light-incident surface face each other, the second light-exiting surface and the third light-incident surface face each other, and the third light-exiting surface and the image sensor face each other; the first light-incident surface is configured to allow the light to enter the light-guiding prism; at least one of the first light-exiting surface, the second light-incident surface, the second light-exiting surface, and the third light-incident surface is a curved surface.

In some embodiments, at least one of the first light-exiting surface and the second light-incident surface is a curved surface, the first light-exiting surface and the second light-incident surface are spaced apart, each of the second light-exiting surface and the third light-incident surface is a flat surface, and the second light-exiting surface and the third light-incident surface are bonded together; the camera module further includes a light-blocking layer located on one of the second light-exiting surface and the third light-incident surface, the light-blocking layer is annular, an orthographic projection of the light-blocking layer on the second light-exiting surface covers an edge contour of the second light-exiting surface, and an orthographic projection of the light-blocking layer on the third light-incident surface covers an edge contour of the third light-incident surface; or at least one of the second light-exiting surface and the third light-incident surface is a curved surface, the second light-exiting surface and the third light-incident surface are spaced apart, each of the first light-exiting surface and the second light-incident surface is a flat surface, and the first light-exiting surface and the second light-incident surface are bonded together; the camera module further includes the light-blocking layer located on one of the first light-exiting surface and the second light-incident surface, the light-blocking layer is annular, an orthographic projection of the light-blocking layer on the first light-exiting surface covers an edge contour of the first light-exiting surface, and an orthographic projection of the light-blocking layer on the second light-incident surface covers an edge contour of the second light-incident surface.

In some embodiments, the camera module further includes a lens assembly, the lens assembly is arranged on a side of the first light-incident surface and facing the first light-incident surface, and the number of lenses having a focal power in the lens assembly is less than or equal to 3.

In some embodiments, the camera module further includes a lens assembly, the lens assembly is arranged on a side of the first light-incident surface and facing the first light-incident surface , the number of lenses having the focal power in the lens assembly is 2 or 3, and surfaces of the first light-exiting surface, the second light-incident surface, the second light-exiting surface, and the third light-incident surface that are curved surfaces are spherical surfaces or aspherical surfaces.

In some embodiments, the camera module further includes a focus driving mechanism and an anti-shake driving mechanism, the focus driving mechanism is configured to drive the lens assembly to move along an axial direction of the lens assembly close to or away from the first light-incident surface , the anti-shake driving mechanism is configured to drive the image sensor to move relative to the light-guiding prism on a plane parallel to the third light-exiting surface.

In some embodiments, the first light-incident surface and the third light-exiting surface are parallel and face a same side, and the lens assembly and the image sensor are located on a same side of the light-guiding prism.

In some embodiments, each of the first light-exiting surface, the second light-incident surface, the second light-exiting surface, and the third light-incident surface is a spherical surface, and the number of the lenses having the focal power in the lens assembly is greater than or equal to 2.

In some embodiments, in a direction along an axial direction of the lens assembly pointing from the lens assembly toward the first light-incident surface, the lens assembly includes a first lens and a second lens sequentially arranged on the lens assembly; each of an object-side surface of the first lens, an image-side surface of the first lens, an object-side surface of the second lens, an image-side surface of the second lens, the first light-exiting surface, the second light-incident surface, the second light-exiting surface, and the third light-incident surface is a curved surface, and each of an object-side surface of the second lens and an image-side surface of the second lens is an aspherical surface.

In some embodiments, the first lens has a positive focal power, the second lens has a negative focal power, the object-side surface of the first lens is a convex surface, the object-side surface of the second lens has a convex surface near an optical axis of the second lens, the image-side surface of the second lens has a concave surface near the optical axis of the second lens , the first light-exiting surface is a concave surface, each of the second light-incident surface and the second light-exiting surface is a convex surface, and the third light-incident surface is a concave surface.

In some embodiments, the camera module meets the following conditional formula: 1.1≤R3/R4≤2.9; R3 is a radius of curvature of the object-side surface of the second lens at the optical axis of the second lens, and R4 is a radius of curvature of the image-side surface of the second lens at the optical axis of the second lens.

In some embodiments, at least two of the first light-exiting surface, the second light-incident surface, the second light-exiting surface, and the third light-incident surface are aspherical surfaces, and the number of the lenses having the focal power in the lens assembly is 1.

In some embodiments, the number of the lenses having the focal power in the lens assembly is 1; the lens assembly includes a first lens; each of an object-side surface of the first lens, an image-side surface of the first lens, the first light-exiting surface, the second light-incident surface, the second light-exiting surface, and the third light-incident surface is a curved surface, and each of the object-side surface of the first lens, the image-side surface of the first lens, the second light-incident surface, and the second light-exiting surface is an aspherical surface.

In some embodiments, the first lens has a positive focal power, the object-side surface of the first lens has a convex surface near an optical axis of the first lens , the first light-exiting surface has a concave surface, each of the second light-incident surface and the second light-exiting surface has a convex surface near an optical axis of the second sub-prism, and the third light-incident surface is a concave surface.

In some embodiments, the lens assembly further includes a diaphragm, and the diaphragm is arranged on the object side of the first lens.

In some embodiments, the camera module meets the following conditional formulas: 0.7≤R6/R7≤1.1; 0.9 ≤R8/R9≤1.7; R6 is a radius of curvature of the first light-exiting surface, R7 is a radius of curvature of the second light-incident surface at an optical axis of the second sub-prism, R8 is a radius of curvature of the second light-exiting surface at the optical axis of the second sub-prism, and R9 is a radius of curvature of the third light-incident surface.

In some embodiments, the camera module meets the following conditional formula: T≤10 mm; T is a size of the camera module along an axial direction of the lens assembly.

In some embodiments, at least one of the first light-exiting surface and the second light-incident surface is a curved surface; the camera module further includes a focus driving mechanism, the focus driving mechanism is configured to drive the first sub-prism to move close to or away from the second sub-prism, and a moving direction of the first sub-prism relative to the second sub-prism is perpendicular to a tangent plane at a center of the first light-exiting surface and a tangent plane at a center of the second light-incident surface; or at least one of the second light-exiting surface and the third light-incident surface is a curved surface; the camera module further includes the focus driving mechanism, the focus driving mechanism is configured to drive the third sub-prism to move close to or away from the second sub-prism, and a moving direction of the third sub-prism relative to the second sub-prism is perpendicular to a tangent plane at a center of the second light-exiting surface and a tangent plane at a center of the third light-incident surface.

In some embodiments, in a case where the focus driving mechanism is configured to drive the first sub-prism to move, the camera module further includes a lens assembly, the lens assembly is arranged on a side of the first light-incident surface and facing the first light-incident surface, and the focus driving mechanism is configured to drive the lens assembly and the first sub-prism to synchronously move relative to the second sub-prism; and in a case where the focus driving mechanism is configured to drive the third sub-prism to move, the focus driving mechanism is configured to drive the third sub-prism and the image sensor to synchronously move relative to the second sub-prism.

In some embodiments, the first sub-prism has a first reflecting surface, and a plane where the first reflecting surface is located forms angles with the plane where the first light-incident surface is located and the plane where the first light-exiting surface is located; the second sub-prism has a second reflecting surface, and a plane where second reflecting surface forms angles with the plane where the second light-incident surface is located and the plane where the second light-exiting surface is located; the third sub-prism has a third reflecting surface, and plane where the third reflecting surface forms angles with the plane where the third light-incident surface is located and the plane where the third light-exiting surface is located; the light-guiding prism is configured such that: the light incident on the first sub-prism from the first light-incident surface is capable of being sequentially reflected by the first reflecting surface and the first light-incident surface and then exiting from the first light-exiting surface, the light incident on the second sub-prism from the second light-incident surface is capable of being reflected by the second reflecting surface and then exiting from the second light-exiting surface, the light incident on the third sub-prism from the third light-incident surface is capable of being sequentially reflected by the third light-exiting surface and the third reflecting surface and then exiting from the third light-exiting surface.

In some embodiments, the first light-exiting surface is a curved surface; in a cross section of the first sub-prism, a line connecting two ends of the first light-exiting surface is perpendicular to the first reflecting surface; the third light-incident surface is a curved surface; in a cross section of the third sub-prism, a line connecting two ends of the third light-incident surface is perpendicular to the third reflecting surface.

In some embodiments, the second light-incident surface is a curved surface; in a cross section of the light-guiding prism, the line connecting the two ends of the first light-exiting surface is parallel to a line connecting two ends of the second light-incident surface; the second light-exiting surface is a curved surface; in a cross section of the light-guiding prism, a line connecting two ends of the second light-exiting surface is parallel to the line connecting the two ends of the third light-incident surface.

In some embodiments, the first sub-prism has a first flat surface opposite to the first light-incident surface, the second sub-prism has a second flat surface opposite to the second reflecting surface; a chief light of a central field of view is capable of being reflected at a first reflection position on the first light-incident surface and reflected at a second reflection position on the second reflecting surface, a part of a chief light of an edge field of view is capable of being reflected at a third reflection position on the second flat surface, and another part of the chief light of the edge field of view is capable of reflected at a fourth reflection position on the first flat surface; in a direction along the first light-incident surface pointing from the first reflection position toward the second reflection position, both the third reflection position and the fourth reflection position are located between the first reflection position and the second reflection position, and both the first light-exiting surface and the second light-incident surface are located between the third reflection position and the fourth reflection position; the third sub-prism has a third flat surface opposite to the third light-exiting surface; the chief light of the central field of view is capable of reflected at a fifth reflection position on the third light-exiting surface, the part of the chief light of the edge field of view is capable of reflected at a sixth reflection position on the third flat surface, and the another part of the chief light of the edge field of view is capable of reflected at a seventh reflection position on the second flat surface; in a direction along the third light-exiting surface pointing from the second reflection position toward the fifth reflection position, both the sixth reflection position and the seventh reflection position are located between the second reflection position and the fifth reflection position, and both the second light-exiting surface and the third light-incident surface are located between the second reflection position and the fifth reflection position.

In some embodiments, the light-guiding prism is configured such that: incident angles of the light on the first light-incident surface, the second reflecting surface, and the third light-exiting surface are greater than a total internal reflection critical angle, so that the light is capable of undergoing total internal reflection on the first light-incident surface, the second reflecting surface, and the third light-exiting surface; the camera module further includes a reflective film arranged on the first reflecting surface and the third reflecting surface, the reflective films is configured to reflect the light incident on the first reflecting surface and the third reflecting surface, and an average reflectivity of the reflective films is greater than or equal to 90%.

In some embodiments, the camera module further includes an anti-reflection film arranged on the first light-incident surface and the third light-exiting surface; the second sub-prism further has a second flat surface opposite to the second reflecting surface, and the camera module further includes a light-blocking structure arranged on the second flat surface.

In some embodiments, an angle between the first light-incident surface and the first reflecting surface is 25°-40°, and an angle between the third reflecting surface and the third light-exiting surface is 25°-40°; the second sub-prism further has a second flat surface opposite to the second reflecting surface, the first light-incident surface, the second flat surface, and the third light-exiting surface are coplanar, and the second reflecting surface is parallel to the first light-incident surface.

In some embodiments, one of the first light-exiting surface and the second light-incident surface is a convex surface, and another of the first light-exiting surface and the second light-incident surface is a concave surface; one of the second light-exiting surface and the third light-incident surface is a convex surface, and another of the second light-exiting surface and the third light-incident surface is a concave surface.

In some embodiments, the camera module further includes a base, a lens assembly, a focus driving mechanism, an anti-shake driving mechanism, and an optical filter; the light-guiding prism is arranged on the base and includes a first sub-prism, a second sub-prism, and a third sub-prism sequentially arranged along a light propagation path, the second sub-prism is arranged between the first sub-prism and the third sub-prism, the focus driving mechanism and the anti-shake driving mechanism are both arranged on the base, the lens assembly is movably arranged on the focus driving mechanism and faces the first sub-prism, the image sensor is movably arranged on the anti-shake driving mechanism and faces the third sub-prism, and the optical filter is arranged on the anti-shake driving mechanism and located between the third sub-prism and the image sensor.

In some embodiments, an electronic device is provided and includes any one of the above camera modules.

The technical features of the above-described embodiments may be combined arbitrarily. For the sake of brevity, not all possible combinations of the technical features in the above embodiments are described. However, as long as there is no contradiction in the combination of these technical features, they should be considered within the scope described in this specification.

The above-described embodiments only describe several implementations of the present disclosure, and the description is relatively specific and detailed, but should not be construed as limiting the scope of the present disclosure. **It** should be pointed out that for those skilled in the art, several modifications and improvements may be made without departing from the concept of the present disclosure, and these all belong to the scope of the present disclosure. Therefore, the scope of the patent of the present disclosure shall be subject to the appended claims.

## Claims

1. A camera module (20), **characterized by** comprising:
an image sensor (23); and,
a light-guiding prism (21), comprising at least two sub-prisms arranged separately; wherein one sub-prism of the at least two sub-prisms faces the image sensor (23), the light-guiding prism (21) is configured such that: light incident on another sub-prism of the at least two sub-prisms is capable of being sequentially reflected by the at least two sub-prisms, exiting from the one sub-prism facing the image sensor (23), and reaching the image sensor (23); wherein at least one of two surfaces that face each other and are arranged on the at least two sub-prisms is a curved surface.

2. The camera module (20) as claimed in claim 1, wherein the light-guiding prism (21) comprises a first sub-prism (211), a second sub-prism (212), and a third sub-prism (213); the first sub-prism (211) has a first light-incident surface (2111) and a first light-exiting surface (2112), and a plane where the first light-incident surface (2111) is located and a plane where the first light-exiting surface (2112) is located form an angle; the second sub-prism (212) has a second light-incident surface (2121) and a second light-exiting surface (2122), and a plane where the second light-incident surface (2121) is located and a plane where the second light-exiting surface (2122) is located form an angle; the third sub-prism (213) has a third light-incident surface (2131) and a third light-exiting surface (2132), and a plane where the third light-incident surface (2131) is located and a plane where the third light-exiting surface (2132) is located form an angle; the first light-exiting surface (2112) and the second light-incident surface (2121) face each other, the second light-exiting surface (2122) and the third light-incident surface (2131) face each other, and the third light-exiting surface (2132) and the image sensor (23) face each other; the first light-incident surface (2111) is configured to allow the light to enter the light-guiding prism (21); at least one of the first light-exiting surface (2112), the second light-incident surface (2121), the second light-exiting surface (2122), and the third light-incident surface (2131) is a curved surface.

3. The camera module (20) as claimed in claim 2, wherein the first light-exiting surface (2112) is a concave surface, the second light-incident surface (2121) is convex surface, the second light-exiting surface (2122) is a convex surface, and the third light-incident surface (2131) is a concave surface.

4. The camera module (20) as claimed in claim 2, wherein at least one of the first light-exiting surface (2112) and the second light-incident surface (2121) is a curved surface, the first light-exiting surface (2112) and the second light-incident surface (2121) are spaced apart, each of the second light-exiting surface (2122) and the third light-incident surface (2131) is a flat surface, and the second light-exiting surface (2122) and the third light-incident surface (2131) are bonded together; the camera module (20) further comprises a light-blocking layer (25) located on one of the second light-exiting surface (2122) and the third light-incident surface (2131), the light-blocking layer (25) is annular, an orthographic projection of the light-blocking layer (25) on the second light-exiting surface (2122) covers an edge contour of the second light-exiting surface (2122), and an orthographic projection of the light-blocking layer (25) on the third light-incident surface (2131) covers an edge contour of the third light-incident surface (2131); or at least one of the second light-exiting surface (2122) and the third light-incident surface (2131) is a curved surface, the second light-exiting surface (2122) and the third light-incident surface (2131) are spaced apart, each of the first light-exiting surface (2112) and the second light-incident surface (2121) is a flat surface, and the first light-exiting surface (2112) and the second light-incident surface (2121) are bonded together; the camera module (20) further comprises the light-blocking layer (25) located on one of the first light-exiting surface (2112) and the second light-incident surface (2121), the light-blocking layer (25) is annular, an orthographic projection of the light-blocking layer (25) on the first light-exiting surface (2112) covers an edge contour of the first light-exiting surface (2112), and an orthographic projection of the light-blocking layer (25) on the second light-incident surface (2121) covers an edge contour of the second light-incident surface (2121); or
at least one of the first light-exiting surface (2112) and the second light-incident surface (2121) is a curved surface; the camera module (20) further comprises a focus driving mechanism (26), the focus driving mechanism (26) is configured to drive the first sub-prism (211) to move close to or away from the second sub-prism (212), and a moving direction of the first sub-prism (211) relative to the second sub-prism (212) is perpendicular to a tangent plane at a center of the first light-exiting surface (2112) and a tangent plane at a center of the second light-incident surface (2121); or at least one of the second light-exiting surface (2122) and the third light-incident surface (2131) is a curved surface; the camera module (20) further comprises the focus driving mechanism (26), the focus driving mechanism (26) is configured to drive the third sub-prism (213) to move close to or away from the second sub-prism (212), and a moving direction of the third sub-prism (213) relative to the second sub-prism (212) is perpendicular to a tangent plane at a center of the second light-exiting surface (2122) and a tangent plane at a center of the third light-incident surface (2131).

5. The camera module (20) as claimed in claim 2, wherein the camera module (20) further comprises a lens assembly (24), the lens assembly (24) is arranged on a side of the first light-incident surface (2111) and facing the first light-incident surface (2111), and the number of lenses (241) having a focal power in the lens assembly (24) is less than or equal to 3.

6. The camera module (20) as claimed in claim 5, wherein the number of lenses (241) having the focal power in the lens assembly (24) is 2 or 3, and surfaces of the first light-exiting surface (2112), the second light-incident surface (2121), the second light-exiting surface (2122), and the third light-incident surface (2131) that are curved surfaces are spherical surfaces or aspherical surfaces; or
at least two of the first light-exiting surface (2112), the second light-incident surface (2121), the second light-exiting surface (2122), and the third light-incident surface (2131) are aspherical surfaces, and the number of the lenses (241) having the focal power in the lens assembly (24) is 1; or
the camera module (20) further comprises a focus driving mechanism (26) and an anti-shake driving mechanism (27), the focus driving mechanism (26) is configured to drive the lens assembly (24) to move along an axial direction of the lens assembly (24) close to or away from the first light-incident surface (2111), the anti-shake driving mechanism (27) is configured to drive the image sensor (23) to move relative to the light-guiding prism (21) on a plane parallel to the third light-exiting surface (2132); or
the first light-incident surface (2111) and the third light-exiting surface (2132) are parallel and face a same side, and the lens assembly (24) and the image sensor (23) are located on a same side of the light-guiding prism (21).

7. The camera module (20) as claimed in claim 2, wherein each of the first light-exiting surface (2112), the second light-incident surface (2121), the second light-exiting surface (2122); the camera module (20) further comprises a lens assembly (24), and the third light-incident surface (2131) is a spherical surface, and the number of lenses (241) having a focal power in the lens assembly (24) is greater than or equal to 2.

8. The camera module (20) as claimed in claim 7, wherein in a direction along an axial direction of the lens assembly (24) pointing from the lens assembly (24) toward the first light-incident surface (2111), the lens assembly (24) comprises a first lens (L1) and a second lens (L2) sequentially arranged on the lens assembly (24); each of an object-side surface of the first lens (L1), an image-side surface of the first lens (L1), an object-side surface of the second lens (L2), an image-side surface of the second lens (L2), the first light-exiting surface (2112), the second light-incident surface (2121), the second light-exiting surface (2122), and the third light-incident surface (2131) is a curved surface, and each of an object-side surface of the second lens (L2) and an image-side surface of the second lens (L2) is an aspherical surface; or
wherein the lens assembly (24) comprises a first lens (Ll); each of an object-side surface of the first lens (L1), an image-side surface of the first lens (L1), the first light-exiting surface (2112), the second light-incident surface (2121), the second light-exiting surface (2122), and the third light-incident surface (2131) is a curved surface, and each of the object-side surface of the first lens (L1), the image-side surface of the first lens (L1), the second light-incident surface (2121), and the second light-exiting surface (2122) is an aspherical surface.

9. The camera module (20) as claimed in any one of claims 7-8, wherein the lens assembly (24) further comprises a diaphragm, and the diaphragm is arranged on the object side of the first lens (L1).

10. The camera module (20) as claimed in any one of claims 2-8, wherein the camera module (20) meets the following conditional formulas:$0.7 \leq R 6 / R 7 \leq 1.1 ;$$0.9 \leq R 8 / R 9 \leq 1.7 ;$ wherein R6 is a radius of curvature of the first light-exiting surface (2112), R7 is a radius of curvature of the second light-incident surface (2121) at an optical axis of the second sub-prism (212), R8 is a radius of curvature of the second light-exiting surface (2122) at the optical axis of the second sub-prism (212), and R9 is a radius of curvature of the third light-incident surface (2131).

11. The camera module (20) as claimed in any one of claims 7-8, wherein the camera module (20) meets the following conditional formula:$T \leq 10 mm ;$ wherein T is a size of the camera module (20) along an axial direction of the lens assembly (24).

12. The camera module (20) as claimed in claim 2, wherein the first sub-prism (211) has a first reflecting surface (2113), and a plane where the first reflecting surface (2113) is located forms angles with the plane where the first light-incident surface (2111) is located and the plane where the first light-exiting surface (2112) is located; the second sub-prism (212) has a second reflecting surface (2123), and a plane where second reflecting surface (2123) forms angles with the plane where the second light-incident surface (2121) is located and the plane where the second light-exiting surface (2122) is located; the third sub-prism (213) has a third reflecting surface (2133), and plane where third reflecting surface (2133) forms angles with the plane where the third light-incident surface (2131) is located and the plane where the third light-exiting surface (2132) is located; the light-guiding prism (21) is configured such that: the light incident on the first sub-prism (211) from the first light-incident surface (2111) is capable of being sequentially reflected by the first reflecting surface (2113) and the first light-incident surface (2111) and then exiting from the first light-exiting surface (2112), the light incident on the second sub-prism (212) from the second light-incident surface (2121) is capable of being reflected by the second reflecting surface (2123) and then exiting from the second light-exiting surface (2122), the light incident on the third sub-prism (213) from the third light-incident surface (2131) is capable of being sequentially reflected by the third light-exiting surface (2132) and the third reflecting surface (2133) and then exiting from the third light-exiting surface (2132).

13. The camera module (20) as claimed in claim 12, wherein the first light-exiting surface (2112) is a curved surface; in a cross section of the first sub-prism (211), a line connecting two ends of the first light-exiting surface (2112) is perpendicular to the first reflecting surface (2113); the third light-incident surface (2131) is a curved surface; in a cross section of the third sub-prism (213), a line connecting two ends of the third light-incident surface (2131) is perpendicular to the third reflecting surface (2133); or
the first sub-prism (211) has a first flat surface (2114) opposite to the first light-incident surface (2111), the second sub-prism (212) has a second flat surface (2124) opposite to the second reflecting surface (2123); a chief light of a central field of view is capable of being reflected at a first reflection position (214) on the first light-incident surface (2111) and reflected at a second reflection position (215) on the second reflecting surface (2123), a part of a chief light of an edge field of view is capable of being reflected at a third reflection position (216) on the second flat surface (2124), and another part of the chief light of the edge field of view is capable of reflected at a fourth reflection position (217) on the first flat surface (2114); in a direction along the first light-incident surface (2111) pointing from the first reflection position (214) toward the second reflection position (215), both the third reflection position (216) and the fourth reflection position (217) are located between the first reflection position (214) and the second reflection position (215), and both the first light-exiting surface (2112) and the second light-incident surface (2121) are located between the third reflection position (216) and the fourth reflection position (217); the third sub-prism (213) has a third flat surface (2134) opposite to the third light-exiting surface (2132); the chief light of the central field of view is capable of reflected at a fifth reflection position (218) on the third light-exiting surface (2132), the part of the chief light of the edge field of view is capable of reflected at a sixth reflection position (219) on the third flat surface (2134), and the another part of the chief light of the edge field of view is capable of reflected at a seventh reflection position (221) on the second flat surface (2124); in a direction along the third light-exiting surface (2132) pointing from the second reflection position (215) toward the fifth reflection position (218), both the sixth reflection position (219) and the seventh reflection position (221) are located between the second reflection position (215) and the fifth reflection position (218), and both the second light-exiting surface (2122) and the third light-incident surface (2131) are located between the sixth reflection position (219) and the seventh reflection position (221); or
the light-guiding prism (21) is configured such that: incident angles of the light on the first light-incident surface (2111), the second reflecting surface (2123), and the third light-exiting surface (2132) are greater than a total internal reflection critical angle, so that the light is capable of undergoing total internal reflection on the first light-incident surface (2111), the second reflecting surface (2123), and the third light-exiting surface (2132); the camera module (20) further comprises a reflective film arranged on the first reflecting surface (2113) and the third reflecting surface (2133), the reflective films is configured to reflect the light incident on the first reflecting surface (2113) and the third reflecting surface (2133), and an average reflectivity of the reflective films is greater than or equal to 90%; or
the camera module (20) further comprises an anti-reflection film arranged on the first light-incident surface (2111) and the third light-exiting surface (2132); the second sub-prism (212) further has a second flat surface (2124) opposite to the second reflecting surface (2123), and the camera module (20) further comprises a light-blocking structure arranged on the second flat surface (2124); or
an angle between the first light-incident surface (2111) and the first reflecting surface (2113) is 25°-40°, and an angle between the third reflecting surface (2133) and the third light-exiting surface (2132) is 25°-40°; the second sub-prism (212) further has a second flat surface (2124) opposite to the second reflecting surface (2123), the first light-incident surface (2111), the second flat surface (2124), and the third light-exiting surface (2132) are coplanar, and the second reflecting surface (2123) is parallel to the first light-incident surface (2111); or
one of the first light-exiting surface (2112) and the second light-incident surface (2121) is a convex surface, and another of the first light-exiting surface (2112) and the second light-incident surface (2121) is a concave surface; one of the second light-exiting surface (2122) and the third light-incident surface (2131) is a convex surface, and another of the second light-exiting surface (2122) and the third light-incident surface (2131) is a concave surface.

14. The camera module (20) as claimed in claim 1, further comprising a base, a lens assembly (24), a focus driving mechanism (26), an anti-shake driving mechanism (27), and an optical filter (28); wherein the light-guiding prism (21) is arranged on the base and comprises a first sub-prism (211), a second sub-prism (212), and a third sub-prism (213) sequentially arranged along a light propagation path, the second sub-prism (212) is arranged between the first sub-prism (211) and the third sub-prism (213), the focus driving mechanism (26) and the anti-shake driving mechanism (27) are both arranged on the base, the lens assembly (24) is movably arranged on the focus driving mechanism (26) and faces the first sub-prism (211), the image sensor (23) is movably arranged on the anti-shake driving mechanism (27) and faces the third sub-prism (213), and the optical filter (28) is arranged on the anti-shake driving mechanism (27) and located between the third sub-prism (213) and the image sensor (23).

15. An electronic device (10), **characterized by** comprising the camera module (20) as claimed in any one of claims 1-14.
